# FASCICULE DE BREVET EUROPEEN

(11) **EP 1 297 504 B1**
(45) Date de publication et mention de la délivrance du brevet: **04.03.2009**
(21) Numéro de dépôt: 01951771.3
(22) Date de dépôt: 04.07.2001
(51) Int. Cl.: G07F 7/10, G07F 19/00, H04L 9/32

(54) **PROCEDE ET SYSTEME POUR LIMITER LA POSSIBILITE DE TRANSFORMATION DE DONNEES**
VERFAHREN UND SYSTEM ZUM BEGRENZEN DER ÜBERTRAGUNGSMÖGLICHKEIT VON DATEN
METHOD AND SYSTEM FOR LIMITING THE POSSIBILITY OF TRANSFORMING DATA

(30) Priorité: 05.07.2000 FR 0008773
(43) Date de publication de la demande: 02.04.2003
(73) Titulaire: VALIDY, 26100 Romans sur Isère (FR)
(72) Inventeur: CUENOD, Jean-Christophe, F-78360 Montesson (FR); SGRO, Gilles, F-26300 Bourg de Péage (FR)
(74) Mandataire: Thibault, Jean-Marc
(86) Numéro de dépôt international: PCT/FR2001/002143
(87) Numéro de publication internationale: WO 2002/003338

(56) Documents cités:
- EP-A- 0 451 057
- EP-A- 0 507 669
- EP-A- 0 814 441
- EP-A- 0 865 010
- WO-A-97/30409
- WO-A-98/22915
- WO-A-98/43211
- DE-A- 19 716 068

## Description

L'objet de l'invention concerne le domaine des moyens techniques adaptés pour limiter, par l'intermédiaire d'au moins une unité de traitement et de mémorisation, la possibilité de transformation de données de type T_{X} en données de type T_{Y} et la possibilité de transformation de données de type T_{Y} en données de type T_{X}, la transformation des données de type T_{X} en données de type T_{Y} étant réalisée à l'aide d'une fonction de transformation de genre A, tandis que la transformation des données de type T_{Y} en données de type T_{X} est réalisée à l'aide d'une fonction de transformation de genre B, inverse de la fonction de transformation de genre A.

L'objet de l'invention trouve une application particulièrement avantageuse mais non exclusive dans le domaine de la génération et de l'utilisation de données destinées à constituer des jetons de pré-paiement, tels que des cartes de pré-paiement par exemple.

Dans l'état de la technique, il apparaît le besoin, pour certaines applications, d'attribuer à au moins trois catégories de personnes ou d'utilisateurs, des capacités de transformation différentes pour des données. La première catégorie d'utilisateurs est capable de transformer des données de type T_{X} en données de type T_{Y} à l'aide d'une fonction de transformation de genre A. La deuxième catégorie d'utilisateurs est capable de transformer des données de type T_{Y} en données de type T_{X} à l'aide de la fonction de transformation de genre B inverse de la fonction de transformation de genre A, mais n'est pas capable de transformer des données de type T_{X} en données de type T_{Y} à l'aide de la fonction de transformation de genre A. La troisième catégorie d'utilisateurs ne dispose ni de la possibilité de transformer les données de type T_{X} en données de type T_{Y} à l'aide de la fonction de transformation de genre A, ni de la possibilité de transformer les données de type T_{Y} en données de type T_{X}, à l'aide de la fonction de transformation de genre B, inverse de la fonction de transformation de genre A.

A titre d'exemple, un tel besoin de distinguer trois catégories d'utilisateurs existe pour des données destinées à constituer des jetons de pré-paiement. Ainsi, une première catégorie d'utilisateurs possède la possibilité de générer à partir d'identifiants de départ connus correspondant chacun à un client possédant un crédit de consommation de ressources, des identifiants de jetons de pré-paiement non falsifiables. Une deuxième catégorie d'utilisateurs est capable de retrouver, à partir d'un identifiant de jeton de pré-paiement, l'identifiant de départ connu, donc le client, en vue de lui affecter sa consommation de ressources. La troisième catégorie d'utilisateurs ne peut ni générer des identifiants de jetons de pré-paiement, ni déterminer le client correspondant à un identifiant de jetons.

Pour la mise en oeuvre d'un tel procédé, il est connu dans l'art antérieur, la technique qui utilise un système de cryptage à clés publiques - clés privées, appliqué deux fois. La première catégorie d'utilisateurs dispose d'une clé publique n° 1 et d'une clé privée n° 2. La deuxième catégorie d'utilisateurs dispose d'une clé publique n° 2 et d'une clé privée n° 1.

Les utilisateurs de la première catégorie sont capables de transformer des données D_{X} de type T_{X} en données D_{Y} de type T_{Y}. A cet effet, les données D_{X} sont encryptées avec la clé publique n° 1 pour obtenir des données intermédiaires qui sont décryptées par la clé privée n° 2 pour former les données D_{Y}.

Les utilisateurs de la deuxième catégorie sont capables de transformer les données D_{Y} de type T_{Y} en données D_{X} de type Tx. Les données D_{Y} sont encryptées avec la clé publique n° 2 pour obtenir des données intermédiaires qui sont décryptées à l'aide de la clé privée n° 1 pour constituer les données D_{X}. Cependant, les utilisateurs de la deuxième catégorie ne sont pas capables de transformer les données D_{X} en données D_{Y}, car elles ne disposent pas de la clé privée n° 2.

Les utilisateurs de la troisième catégorie ne sont ni capables de transformer les données D_{X} en donnée D_{Y}, ni les données D_{Y} en données D_{X}.

La mise en oeuvre de cette technique de limitation de la possibilité de transformation de données nécessite la mise en place d'une infrastructure de certification de clés publiques. Une telle infrastructure est relativement complexe et onéreuse.

L'objet de l'invention vise donc à remédier aux inconvénients de l'art antérieur en proposant une technique permettant de limiter les possibilités d'utilisation de données pour trois catégories d'utilisateurs, en mettant en oeuvre des moyens techniques simples et peu onéreux.

Pour atteindre un tel objectif, l'objet de l'invention concerne un procédé conforme à la revendication 1.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.
La **fig. 1** est un schéma-bloc fonctionnel illustrant les moyens techniques permettant la mise en oeuvre de l'invention.
La **fig. 2** est un schéma illustrant les transformations des données mises en oeuvre par l'objet de l'invention.
La **fig. 3** est un schéma montrant l'endroit de l'exécution des fonctions de transformations.
La **fig. 4** est un schéma illustrant les catégories d'utilisateurs discriminés par l'objet de l'invention.
La **fig. 5** est un schéma illustrant la réalisation des fonctions de transformation utilisant la technique connue de cryptage à clés secrètes.
Les **fig. 6** et **7** sont des schémas illustrant deux exemples de réalisation des fonctions de transformation utilisant la technique connue de cryptage à clés publiques - clés privées.
La **fig. 8** est un schéma illustrant la mise en oeuvre d'une fonction de transformation additionnelle aux fonctions connues de cryptage.
La **fig. 9** est un schéma illustrant un exemple de mise en oeuvre de dispositifs de personnalisation d'unités de traitement et de mémorisation.
La **fig.10** est un schéma illustrant le principe de la génération d'informations.
La **fig. 11** est un schéma illustrant la génération et le transfert d'informations vers les unités de traitement et de mémorisation, dans une phase de personnalisation.
Les **fig. 12** et **13** sont des schémas, respectivement de principe et applicatif illustrant un exemple d'application de l'objet de l'invention permettant la génération et l'utilisation de jetons de pré-paiement.

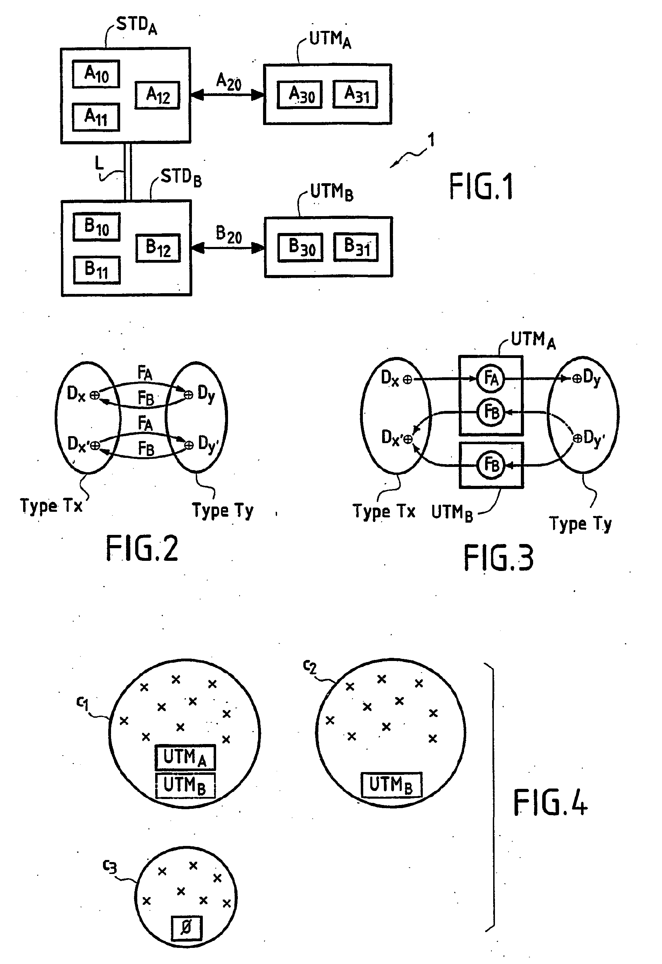

La **fig. 1** illustre un exemple de réalisation d'un système **1** pour limiter la possibilité de transformation de données. Le système **1** comporte un système **STD_{A}** de traitement de données de genre A. D'une manière générale, un tel système **STD_{A}** de traitement de données de genre A comporte au moins un processeur **A₁₀** permettant l'exécution d'un logiciel de mise en oeuvre **A₁₁.** Le système **STD_{A}** de traitement de données de genre A peut être un ordinateur, un serveur ou faire partie, par exemple, de diverses machines, dispositifs, produits fixes ou mobiles, ou véhicules au sens général. Le système **STD_{A}** de traitement de données de genre A est connecté, à l'aide de moyens de transfert **A₁₂,** par une liaison **A₂₀,** à une unité **UTM_{A}** de traitement et de mémorisation de genre A.

Par souci de simplification dans la suite de la description, le système **STD_{A}** de traitement de données de genre A sera désigné par système **STD_{A}** et l'unité **UTM_{A}** de traitement et de mémorisation de genre A sera désignée par unité **UTM_{A}.**

La liaison **A₂₀** entre le système **STD_{A}** et l'unité **UTM_{A}** peut être réalisée de toute manière possible, telle que par exemple, par une ligne série, un bus USB, une liaison radio, une liaison optique , une liaison réseau ou une connexion électrique directe sur un circuit du système **STD_{A},** etc. Il est à noter que l'unité **UTM_{A}** peut éventuellement se trouver physiquement à l'intérieur du même circuit intégré que le processeur du système **STD_{A}.** Dans ce cas, l'unité **UTM_{A}** peut être considérée comme un co-processeur par rapport au processeur du système **STD_{A}** et la liaison **A₂₀** est interne au circuit intégré.

L'unité **UTM_{A}** comporte des moyens de transfert **A₃₀** et des moyens de traitement et de mémorisation **A₃₁.** Il doit être considéré que les moyens de transfert **A₁₂** et **A₃₀** sont de nature logicielle et/ou matérielle et sont aptes à assurer et à optimiser la communication des données entre le système **STD_{A}** et l'unité **UTM_{A}.** Ces moyens de transfert **A₁₂, A₃₀** sont adaptés pour permettre de disposer d'un logiciel de mise en oeuvre **A₁₁** qui est, de préférence, indépendant du type de la liaison **A₂₀** utilisée. Ces moyens de transfert **A₁₂, A₃₀** ne font pas partie de l'objet de l'invention et ne sont pas décrits plus précisément car ils sont bien connus de l'Homme de l'art.

Cette unité **UTM_{A}** est capable :
- à l'aide des moyens de transfert **A₃₀** :
   - d'accepter des données fournies par le système **STD_{A},**
   - et de restituer des données au système **STD_{A},**
- à l'aide des moyens de traitement et de mémorisation **A₃₁ :**
   - de stocker des données éventuellement de manière secrète et de conserver au moins une partie des celles-ci même lorsque l'unité **UTM_{A}** est hors tension,
   - et d'effectuer du traitement algorithmique sur des données, une partie ou la totalité de ce traitement pouvant être secret.

A titre d'exemple non limitatif, cette unité **UTM_{A}** peut être constituée par une clé matérielle sur le bus USB du système **STD_{A}** ou de préférence par une carte à puce et son interface communément appelé lecteur de carte relié au système **STD_{A}.**

Dans le cas où l'unité **UTM_{A}** est constituée par une carte à puce et son interface, les moyens de transfert **A₃₀** sont décomposés en deux parties dont l'une se trouve sur l'interface et dont l'autre se trouve sur la carte à puce. Dans cet exemple de réalisation, l'absence de la carte à puce est considérée comme équivalente à l'absence de l'unité **UTM_{A},** dans la mesure où les moyens de traitement et de mémorisation **A₃₁** contenus dans la carte à puce sont absents.

Le système **1** comporte également un système **STD_{B}** de traitement de données de genre B. D'une manière générale, un tel système **STD_{B}** de traitement de données de genre B comporte au moins un processeur **B₁₀** permettant l'exécution d'un logiciel de mise en oeuvre **B₁₁.** Le système **STD_{B}** de traitement de données de genre B peut être un ordinateur, un serveur ou faire partie, par exemple, de diverses machines, dispositifs, produits fixes ou mobiles, ou véhicules au sens général. Le système **STD_{B}** de traitement de données de genre B est connecté, à l'aide de moyens de transfert **B₁₂,** par une liaison **B₂₀,** à une unité **UTM_{B}** de traitement et de mémorisation de genre B.

Par souci de simplification dans la suite de la description, le système **STD_{B}** de traitement de données de genre B sera désigné par système **STD_{B}** et l'unité **UTM_{B}** de traitement et de mémorisation de genre B sera désignée par unité **UTM_{B}.**

La liaison **B₂₀** entre le système **STD_{B}** et l'unité **UTM_{B}** peut être réalisée de toute manière possible, telle que par exemple, par une ligne série, un bus USB, une liaison radio, une liaison optique, une liaison réseau ou une connexion électrique directe sur un circuit du système **STD_{B},** etc. Il est à noter que l'unité **UTM_{B}** peut éventuellement se trouver physiquement à l'intérieur du même circuit intégré que le processeur du système **STD_{B}.** Dans ce cas, l'unité **UTM_{B}** peut être considérée comme un co-processeur par rapport au processeur du système **STD_{B}** et la liaison **B₂₀** est interne au circuit intégré.

L'unité **UTM_{B}** comporte des moyens de transfert **B₃₀** et des moyens de traitement et de mémorisation **B₃₁.** Il doit être considéré que les moyens de transfert **B₁₂** et **B₃₀** sont de nature logicielle et/ou matérielle et sont aptes à assurer et à optimiser la communication des données entre le système **STD_{B}** et l'unité **UTM_{B}.** Ces moyens de transfert **B₁₂, B₃₀** sont adaptés pour permettre de disposer d'un logiciel de mise en oeuvre **B₁₁** qui est, de préférence, indépendant du type de la liaison **B₂₀** utilisée. Ces moyens de transfert **B₁₂, B₃₀** ne font pas partie de l'objet de l'invention et ne sont pas décrits plus précisément car ils sont bien connus de l'Homme de l'art.

Cette unité **UTM_{B}** est capable :
- à l'aide des moyens de transfert **B₃₀:**
   - d'accepter des données fournies par le système **STD_{B},**
   - et de restituer des données au système **STD_{B},**
- à l'aide des moyens de traitement et de mémorisation **B₃₁ :**
   - de stocker des données éventuellement de manière secrète et de conserver au moins une partie des celles-ci même lorsque l'unité **UTM_{B}** est hors tension,
   - et d'effectuer du traitement algorithmique sur des données, une partie ou la totalité de ce traitement pouvant être secret.

A titre d'exemple non limitatif, cette unité **UTM_{B}** peut être constituée par une clé matérielle sur le bus USB du système **STD_{B}** ou, de préférence, par une carte à puce et son interface communément appelé lecteur de carte relié au système **STD_{B}.**

Dans le cas où l'unité **UTM_{B}** est constituée par une carte à puce et son interface, les moyens de transfert **B₃₀** sont décomposés en deux parties dont l'une se trouve sur l'interface et dont l'autre se trouve sur la carte à puce. Dans cet exemple de réalisation, l'absence de la carte à puce est considérée comme équivalente à l'absence de l'unité **UTM_{B},** dans la mesure où les moyens de traitement et de mémorisation **B₃₁** contenus dans la carte à puce sont absents.

Le système **1** selon l'invention comporte aussi à au moins un moment, au moins une liaison **L** entre le système **STD_{A}** et le système **STD_{B}.** Cette liaison **L** constitue un canal de transfert d'informations et peut être réalisée par tous moyens connus. Cette liaison **L** peut être assurée par un réseau informatique et/ou par une transmission matérielle d'informations (remise en mains propres, transmission par voie postale, etc). Selon les applications, la liaison **L** peut transmettre des informations du système **STD_{A}** vers le système **STD_{B},** du système **STD_{B}** vers le système **STD_{A}** ou dans les deux sens. A titre d'exemple non limitatif, le transfert par cette liaison **L** entre le système **STD_{A}** et le système **STD_{B}** peut emprunter le canal hétérogène suivant : transmission de fichiers à partir du système **STD_{A},** puis impression sur un support physique, puis transfert de ce support physique, puis saisie d'information sur un ordinateur, puis enfin transfert par un réseau informatique vers le système **STD_{B}.**

La **fig. 2** permet d'illustrer les transformations de données effectuées par le procédé selon l'invention. Il est défini deux types de données, à savoir le type Tx et le type Ty. Chacun de ces types de données Tx et Ty est un type informatique de données, tel que par exemple, un caractère de 8 bits, un entier de 32 bits, un entier de 64 bits, un entier de 512 bits, un flottant de 64 bits. Dans une variante préférée de réalisation, il est utilisé comme type de données Tx, ainsi que comme type de données Ty, le type entier de 64 bits.

L'invention utilise une fonction **F_{A}** de transformation de genre A et une fonction **F_{B}** de transformation de genre B. La fonction **F_{A}** de transformation de genre A est une bijection ayant comme ensemble de départ le type Tx et comme ensemble d'arrivée le type Ty. La fonction **F_{B}** de transformation de genre B est une bijection ayant comme ensemble de départ le type Ty et comme ensemble d'arrivée le type Tx. Les fonctions **F_{A}** de transformation de genre A et **F_{B}** de transformation de genre B sont inverses l'une de l'autre. Par souci de simplification dans la suite de la description, la fonction **F_{A}** de transformation de genre A sera désignée par fonction **F_{A}** et la fonction **F_{B}** de transformation de genre B sera désignée par fonction **F_{B}.**

Ainsi, la fonction **F_{A}** transforme une donnée Dx de type Tx en une donnée Dy de type Ty, soit Dy = F_{A} (Dx), tandis que la fonction **F_{B}** transforme une donnée Dy' de type Ty en une donnée Dx' de type Tx, soit Dx' = F_{B} (Dy').

Puisque les deux fonctions **F_{A}** et **F_{B}** sont inverses l'une de l'autre :
- en appliquant successivement les deux fonctions **F_{A},** puis **F_{B}** à une donnée Dx, on retrouve la donnée Dx, soit Dx = F_{B} (F_{A}(Dx)),
- en appliquant successivement les deux fonctions **F_{B},** puis **F_{A},** à une donnée Dy', on retrouve la donnée Dy', soit Dy' = F_{A} (F_{B}(Dy')).

La **fig. 3** illustre l'endroit de l'exécution des fonctions **F_{A}** et **F_{B}.** Afin de mettre en oeuvre l'invention, les fonctions **F_{A}** et **F_{B}** doivent rester confidentielles. A cette fin, la fonction **F_{A}** s'effectue uniquement à l'intérieur de l'unité **UTM_{A}** et la fonction **F_{B}** s'effectue à l'intérieur de l'unité **UTM_{B}** et, éventuellement, à l'intérieur de l'unité **UTM_{A}.** Ainsi, dans l'unité **UTM_{A},** une donnée Dx de type Tx est transformée par la fonction **F_{A}** en une donnée Dy de type Ty et, éventuellement, une donnée Dy' de type Ty est transformée par la fonction **F_{B}** en une donnée Dx' de type Tx. Par ailleurs, dans l'unité **UTM_{B},** une donnée Dy' de type Ty est transformée par la fonction **F_{B}** en une donnée Tx' de type Tx.

La **fig. 4** permet d'expliciter les trois catégories de personnes ou d'utilisateurs **C₁, C₂, C₃** discriminées par l'objet de l'invention, en fonction de la possession ou non des unités **UTM_{A}** et/ou **UTM_{B}.**

Chaque utilisateur de la catégorie **C₁** a la possibilité de transformer une donnée de type Tx en donnée de type Ty avec la fonction **F_{A}** et, éventuellement de transformer une donnée de type Ty en donnée de type Tx à l'aide de la fonction **F_{B}.** Chaque utilisateur de la catégorie **C₁** peut ainsi utiliser une unité **UTM_{A}** et, éventuellement, une unité **UTM_{B}.**

Chaque utilisateur de la catégorie **C₂** a la possibilité de transformer une donnée de type Ty en donnée de type Tx à l'aide de la fonction **F_{B}.** Toutefois, chaque utilisateur de la catégorie **C₂** n'a pas la possibilité de transformer une donnée de type Tx en donnée de type Ty avec la fonction **F_{A}.** Chaque utilisateur de la deuxième catégorie peut utiliser une unité **UTM_{B},** mais pas une unité **UTM_{A}.**

Aucun utilisateur de la troisième catégorie **C₃** ne possède, ni une unité **UTM_{A},** ni une unité **UTM_{B}.** Aucun des utilisateurs de cette troisième catégorie C₃ n'a la possibilité de transformer une donnée de type Tx en donnée de type Ty avec la fonction **F_{A},** et de transformer une donnée de type Ty en donnée de type Tx avec la fonction **F_{B}.**

Bien entendu, les fonctions **F_{A}** et **F_{B}** ne sont intéressantes que dans la mesure où elles ne sont pas triviales et sont difficilement déductibles à partir de l'observation des données qui rentrent et sortent des unités **UTM_{A}** et/ou **UTM_{B}.**

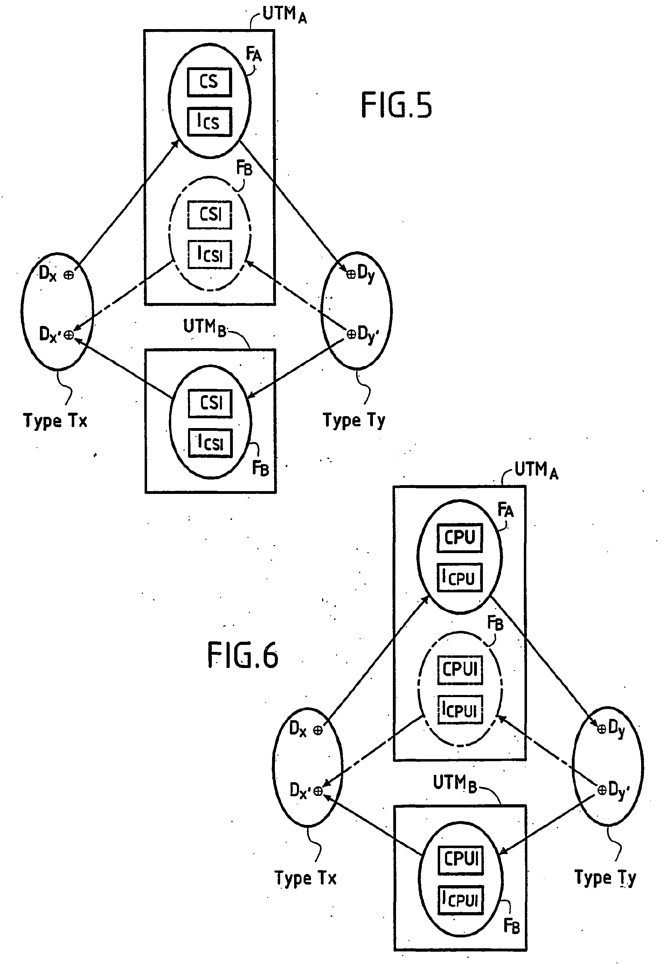

La **fig. 5** illustre une première variante de réalisation des fonctions **F_{A}** et **F_{B}** utilisant la technique connue de cryptage à clés secrètes. Selon cette variante, la fonction **F_{A}** est réalisée sous la forme d'une fonction de cryptage à clé secrète **CS** utilisant comme clé secrète, une information secrète **I_{CS}.**

La fonction de cryptage à clé secrète **CS** est une fonction de cryptage standard par exemple DES, DES inverse, triple DES ou IDEA. L'information secrète **I_{CS}** est une clé pour la fonction de cryptage choisie. A ce titre, l'information secrète **I_{CS}** appartient au type **K_{CS},** c'est-à-dire à l'ensemble des clés pour cette fonction. Par exemple, cette information secrète **I_{CS}** de type **K_{CS}** est un entier de 56 bits quand la fonction de cryptage à clé secrète **CS** choisie est DES.

En d'autres termes, la transformation d'une donnée Dx de type Tx en une donnée Dy de type Ty avec la fonction **F_{A}** revient à crypter la donnée Dx avec la fonction de cryptage à clé secrète **CS** en utilisant comme clé secrète, l'information secrète **I_{CS}** de type **K_{CS}.**

D'une manière similaire, la fonction **F_{B},** inverse de la fonction **F_{A},** est elle aussi réalisée sous la forme d'une fonction de cryptage à clé secrète **CSI** dite inverse, utilisant comme clé secrète, une information secrète **I_{CSI}.**

La fonction de cryptage à clé secrète inverse **CSI** est une fonction de cryptage standard, par exemple DES, DES inverse, triple DES ou IDEA.

L'information secrète **I_{CSI}** est une clé pour la fonction de cryptage choisie. A ce titre, l'information secrète **I_{CSI}** appartient au type **K_{CSI},** c'est-à-dire à l'ensemble des clés pour cette fonction.

En d'autres termes, la transformation d'une donnée Dy' de type Ty en une donnée Dx' de type Tx avec la fonction **F_{B}** revient à crypter la donnée Dy' avec la fonction de cryptage à clé secrète inverse **CSI** en utilisant comme clé secrète, l'information secrète **I_{CSI}** de type **K_{CSI}.**

La fonction de cryptage à clé secrète inverse **CSI** utilisant la clé secrète **I_{CSI},** est l'inverse de la fonction de cryptage à clé secrète **CS** utilisant la clé secrète **I_{CS}.** Par exemple, dans le cas où la fonction de cryptage à clé secrète **CS** est réalisée avec la fonction DES, la fonction de cryptage à clé secrète inverse **CSI** doit être réalisée par la fonction DES inverse, tandis que les deux informations secrètes **I_{CS}** de type **K_{CS}** et **I_{CSI}** de type **K_{CSI}** doivent être identiques.

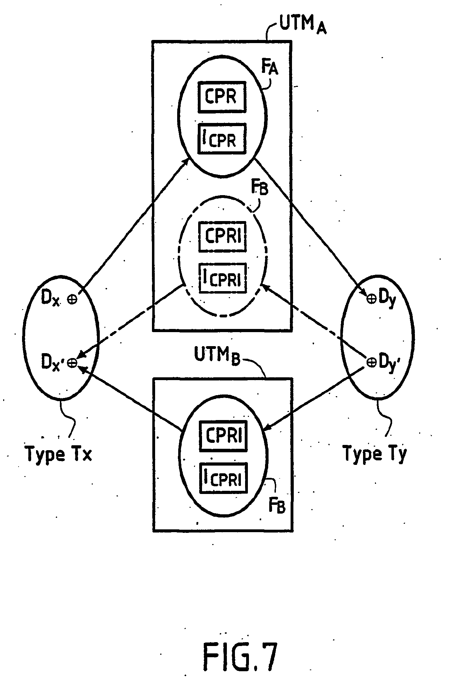

Les **fig. 6** **et** **7** illustrent une deuxième variante de réalisation des fonctions **F_{A}** et **F_{B},** utilisant la technique connue de cryptage à clé publique - clé privée.

La **fig. 6** illustre un premier exemple de réalisation dans lequel la fonction **F_{A}** est réalisée sous la forme d'une fonction d'encryptage à clé publique **CPU** utilisant comme clé publique, une information secrète **I_{CPU}.**

La fonction d'encryptage à clé publique **CPU** est une fonction d'encryptage standard, par exemple du type RSA. L'information secrète **I_{CPU}** est une clé pour la fonction d'encryptage choisie. A ce titre, l'information secrète **I_{CPU}** appartient au type **K_{CPU},** c'est-à-dire à l'ensemble des clés publiques pour cette fonction. Par exemple, cette information secrète **I_{CPU}** de type **K_{CPU}** peut être formée par un "module" et un "exposant public" quand la fonction d'encryptage à clé publique **CPU** choisie est RSA.

En d'autres termes, la transformation d'une donnée Dx de type Tx en une donnée Dy de type Ty avec la fonction **F_{A},** revient à encrypter la donnée Dx avec la fonction d'encryptage à clé publique **CPU** en utilisant comme clé publique, l'information secrète **I_{CPU}** du type **K_{CPU}.**

De manière similaire, la fonction **F_{B},** inverse de la fonction **F_{A},** est quant à elle réalisée sous la forme d'une fonction de décryptage à clé privée **CPUI** utilisant comme clé privée, une information secrète **I_{CPUI}.**

La fonction de décryptage à clé privée **CPUI** est une fonction standard, par exemple RSA.

L'information secrète **I_{CPUI}** est une clé pour la fonction de décryptage choisie. A ce titre, l'information secrète **I_{CPUI}** appartient au type **K_{CPUI},** c'est-à-dire à l'ensemble des clés privées pour cette fonction.

En d'autres termes, la transformation d'une donnée Dy' de type Ty en une donnée Dx' de type Tx avec la fonction **F_{B},** revient à décrypter la donnée Dy' avec la fonction de décryptage à clé privée **CPUI** en utilisant comme clé privée, l'information secrète **I_{CPUI}** du type **K_{CPUI}.**

La fonction de décryptage à clé privée **CPUI** utilisant la clé privée **I_{CPUI},** est l'inverse de la fonction d'encryptage à clé publique **CPU** utilisant la clé publique **I_{CPUI}.** Par exemple, dans le cas où la fonction d'encryptage à clé publique **CPU** est réalisée avec la fonction d'encryptage RSA, la fonction de décryptage à clé privée **CPUI** doit être réalisée par la fonction de décryptage RSA, tandis que l'information secrète **I_{CPUI}** de type **K_{CPU}** et l'information secrète **I_{CPUI}** de type **K_{CPUI}** doivent être respectivement une clé publique RSA et sa clé privée associée.

La **fig. 7** illustre un deuxième exemple de réalisation dans lequel la fonction **F_{A}** est réalisée sous la forme d'une fonction d'encryptage à clé privée **CPR** utilisant comme clé privée, une information secrète **I_{CPR}.**

La fonction d'encryptage à clé privée **CPR** est une fonction d'encryptage standard, par exemple du type RSA. L'information secrète **I_{CPR}** est une clé pour la fonction d'encryptage choisie. A ce titre, l'information secrète **I_{CPR}** appartient au type **K_{CPR},** c'est-à-dire à l'ensemble des clés privées pour cette fonction. Par exemple, cette information secrète **I_{CPR}** de type **K_{CPR}** peut être formée par un "module" et un "exposant privé" quand la fonction d'encryptage à clé privée **CPR** choisie est RSA.

En d'autres termes, la transformation d'une donnée Dx de type Tx en une donnée Dy de type Ty avec la fonction **F_{A},** revient à encrypter la donnée Dx avec la fonction d'encryptage à clé privée **CPR** en utilisant comme clé privée, l'information secrète **I_{CPR}** de type **K_{CPR}.**

De manière similaire, la fonction **F_{B},** inverse de la fonction **F_{A},** est quant à elle réalisée sous la forme d'une fonction de décryptage à clé publique CPRI utilisant comme clé publique, une information secrète **I_{CPRI}.**

La fonction de décryptage à clé publique **CPRI** est une fonction standard, par exemple RSA.

L'information secrète **I_{CPRI}** est une clé pour la fonction de décryptage choisie. A ce titre, l'information secrète **I_{CPRI}** appartient au type **K_{CPRI},** c'est-à-dire à l'ensemble des clés publiques pour cette fonction.

En d'autres termes, la transformation d'une donnée Dy' de type Ty en une donnée Dx' de type Tx avec la fonction **F_{B}** revient à décrypter la donnée Dy' avec la fonction de décryptage à clé publique **CPRI** en utilisant comme clé publique, l'information secrète **I_{CPRI}** de type **K_{CPRI}.**

La fonction de décryptage à clé publique **CPRI** utilisant la clé publique **I_{CPRI},** est l'inverse de la fonction d'encryptage à clé privée **CPR** utilisant la clé privée I_{CPR}. Par exemple, dans le cas où la fonction d'encryptage à clé privée **CPR** est réalisée avec la fonction d'encryptage RSA, la fonction de décryptage à clé publique **CPRI** doit être réalisée par la fonction de décryptage RSA, tandis que l'information secrète **I_{CPR}** de type **K_{CPR}** et l'information secrète **I_{CPRI}** de type **K_{CPRI}** doivent être respectivement une clé privée RSA et sa clé publique associée.

Dans les deux exemples décrits en relation des **fig. 6** et **7****,** les termes "fonction d'encryptage" et "fonction de décryptage" sont utilisés pour désigner deux opérations de cryptage inverses l'une de l'autre. Par souci de clarté, la première fonction est appelée fonction d'encryptage et la deuxième fonction est appelée fonction de décryptage. Ce choix est arbitraire, de sorte que la première fonction pourrait aussi bien être appelée fonction de décryptage et la deuxième fonction, fonction d'encryptage.

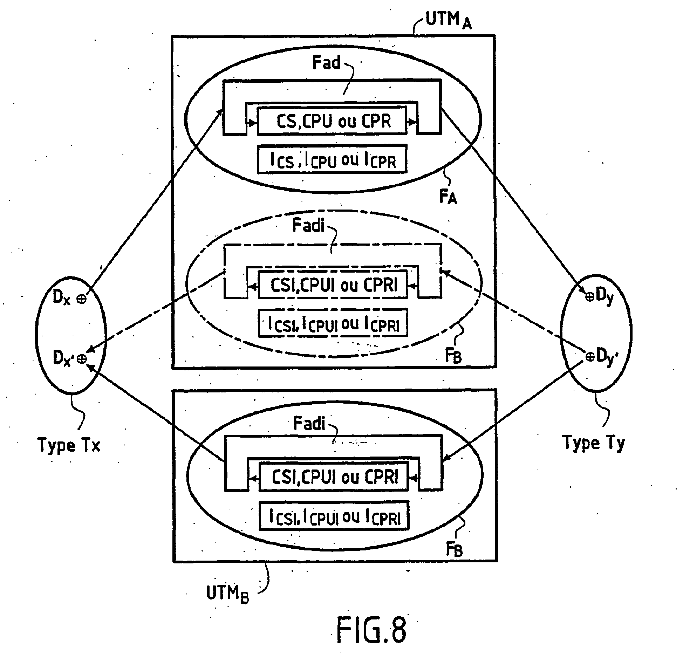

La **fig. 8** est un schéma illustrant la mise en oeuvre d'une fonction de transformation additionnelle aux fonctions connues de cryptage, telles qu'illustrées aux **fig. 5** à **7****.** En effet, il peut être utilisé en tant que fonction **F_{A},** une fonction additionnelle de transformation **F_{ad}** combinée à la fonction de cryptage à clé secrète **CS** ou à la fonction d'encryptage à clé publique **CPU** ou à la fonction d'encryptage à clé privée **CPR.** Cette fonction additionnelle de transformation **F_{ad}** peut être combinée d'une manière quelconque avant et/ou après la fonction de cryptage à clé secrète **CS,** la fonction d'encryptage à clé publique **CPU** ou la fonction d'encryptage à clé privée **CPR.** Bien entendu, cette fonction additionnelle de transformation **F_{ad}** peut être formée elle aussi par au moins une fonction de cryptage.

D'une manière similaire, la fonction **F_{B}** peut être formée par une fonction additionnelle de transformation, dite inverse **F_{adi},** qui est combinée à la fonction de cryptage à clé secrète inverse **CSI** ou à la fonction de décryptage à clé privée **CPUI** ou à la fonction de décryptage à clé publique **CPRI.**

Quelles que soient les variantes de réalisation des fonctions de transformation illustrées aux **fig. 5** à **8****,** il doit être considéré que l'objet de l'invention comporte, en outre, une phase de personnalisation des unités de traitement et de mémorisation au cours de laquelle les fonctions de transformations sont implantées dans les unités de traitement et de mémorisation.

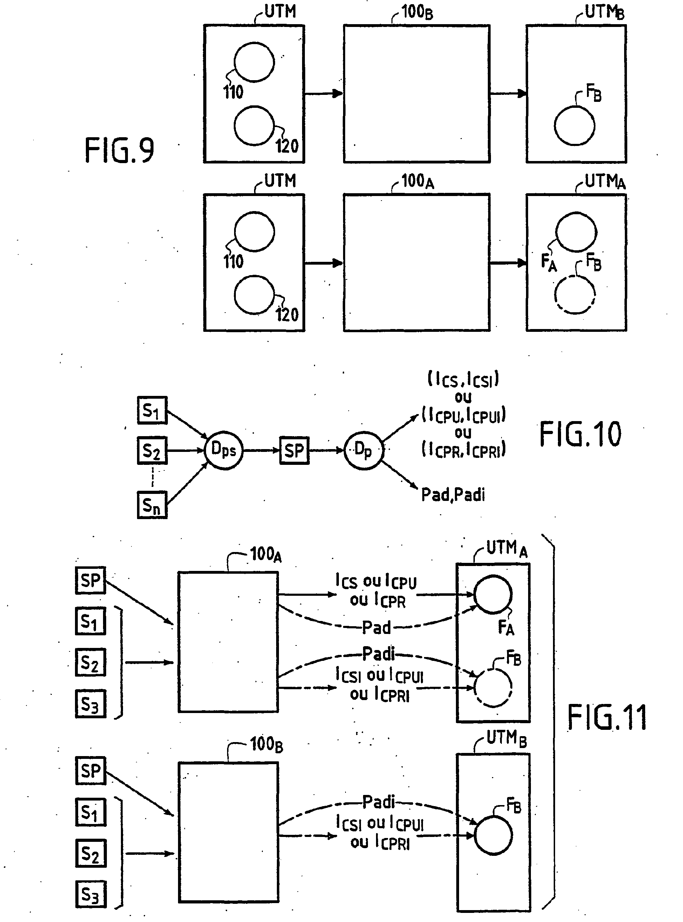

La **fig. 9** illustre un exemple de mise en oeuvre de dispositifs de personnalisation **100_{A}** et **100_{B}** pour des unités de traitement et de mémorisation **UTM,** en vue d'obtenir respectivement, des unités **UTM_{A}** et des unités **UTM_{B}.**

Dans un exemple préféré de réalisation, il doit être considéré que chaque unité de traitement et de mémorisation **UTM** comporte des moyens algorithmiques **110** nécessaires pour effectuer la fonction **F_{A}** et des moyens algorithmiques **120** nécessaires pour effectuer la fonction **F_{B}.** Dans le cas où il est utilisé une fonction de cryptage à clé secrète **CS,** les moyens algorithmiques **110** correspondent à des moyens rendant possible, par exemple, la réalisation de la fonction DES. Dans ce cas, les moyens de traitement algorithmiques **120** correspondent à des moyens rendant possible la réalisation de la fonction DES inverse.

Dans une phase de personnalisation de genre B, le dispositif de personnalisation **100_{B}** réalisé par l'intermédiaire d'un système de traitement de données de tous types, comporte des moyens pour personnaliser au moins une unité de traitement et de mémorisation **UTM,** en vue d'obtenir une unité **UTM_{B}.** A cet effet, les moyens algorithmiques **120** sont utilisés de manière à obtenir une unité **UTM_{B}** qui est capable d'effectuer la fonction **F_{B}.** Toutefois, le dispositif de personnalisation **100_{B}** doit aussi :
- soit inhiber les moyens algorithmiques **110** nécessaires pour effectuer la fonction **F_{A}**,
- soit ne pas charger dans l'unité de traitement et de mémorisation **UTM,** les informations de personnalisation pour effectuer la fonction **F_{A},** et éventuellement empêcher leur chargement ultérieur.

II est ainsi obtenu une unité **UTM_{B}** comportant la fonction **F_{B}** et ne comportant pas la fonction **F_{A}.**

D'une manière analogue, le dispositif de personnalisation **100_{A}** réalisé par l'intermédiaire d'un système de traitement de données de tous types, est utilisé dans une phase de personnalisation de genre A, pour personnaliser au moins une unité de traitement et de mémorisation **UTM,** en vue d'obtenir une unité **UTM_{A}** comportant la fonction **F_{A}** et, éventuellement, la fonction **F_{B}.** Dans le cas où l'unité **UTM_{A}** ne comporte pas la fonction **F_{B},** les moyens algorithmiques **120** sont inhibés ou les informations de personnalisation ne sont pas chargées, comme expliqué ci-dessus.

Bien entendu, les dispositifs de personnalisation **100_{A}** et **100_{B}** peuvent être réalisés par l'intermédiaire d'un même système de traitement de données. De plus, il peut être utilisé des unités de traitement et de mémorisation **UTM** comportant uniquement les moyens algorithmiques nécessaires pour effectuer une seule des deux fonctions de transformation. Dans ce cas, il n'est évidemment pas nécessaire d'inhiber la fonction inverse.

Les dispositifs de personnalisation **100_{A}** et **100_{B}** sont utilisés également pour assurer la génération d'informations secrètes utilisées par les fonctions **F_{A}** et **F_{B}** et, éventuellement, pour assurer la génération des paramètres additionnels pour les fonctions additionnelles **F_{ad}, F_{adi}** décrites dans les exemples illustrés aux **fig. 5** à **8****.**

La **fig. 10** permet d'expliciter le principe général de génération d'informations. Selon cette figure, un secret principal **SP** est utilisé par un algorithme **Dₚ** permettant de déterminer une des paires d'informations secrètes **I_{CS}** de type **K_{CS}** et **I_{CSI}** de type **K_{CSI},** ou **I_{CPU}** de type **K_{CPU}** et **I_{CPUI}** de type **K_{CPUI},** ou **I_{CPR}** de type **K_{CPR}** et **I_{CPRI}** de type **K_{CPRI}** et, éventuellement, des paramètres **P_{ad}** pour la fonction additionnelle de transformation **F_{ad} et** des paramètres **P_{adi}** pour la fonction additionnelle inverse **F_{adi}.**

Pour une sécurité accrue, il peut être avantageux que le secret principal **SP** puisse être déterminé à partir de secrets partagés **S₁, S₂,** ..., **Sₙ,** à l'aide d'un algorithme de reconstruction de secrets **Dₚₛ.**

Après la génération de ces informations, il peut être envisagé de procéder à la personnalisation des unités **UTM_{A}** et **UTM_{B}.** Ainsi, tel que cela ressort plus précisément de la **fig. 11****,** au cours de la phase de personnalisation de genre A, le dispositif **100_{A}** de personnalisation est utilisé, pour transférer vers une unité de traitement et de mémorisation **UTM,** en vue d'obtenir une unité **UTM_{A} :**
- l'information secrète **I_{CS}** de type **K_{CS}** ou **I_{CPU}** de type **K_{CPU}** ou **I_{CPR}** de type **K_{CPR}** et, éventuellement, les paramètres **P_{ad}** pour la fonction additionnelle de transformation **F_{ad}** pour permettre à l'unité **UTM_{A}** d'effectuer la fonction **F_{A},**
- et éventuellement, l'information secrète **I_{CSI}** de type **K_{CSI}** ou **I_{CPUI}** de type **K_{CPUI}** ou **I_{CPRI}** de type **K_{CPRI}** et, éventuellement, les paramètres **P_{adi}** pour la fonction additionnelle de transformation inverse **F_{adi}** pour permettre à l'unité **UTM_{A}** d'effectuer la fonction **F_{B}.**

De manière analogue, le dispositif de personnalisation **100_{B}** est utilisé au cours de la phase de personnalisation de genre B pour transférer vers une unité de traitement et de mémorisation **UTM,** en vue d'obtenir une unité **UTM_{B},** l'information secrète **I_{CSI}** de type **K_{CSI},** ou **I_{CPUI}** de type **K_{CPUI}** ou **I_{CPRI}** de type **K_{CPRI}** et, éventuellement les paramètres **P_{adi}** pour la fonction additionnelle de transformation inverse **F_{adi}** pour permettre à l'unité **UTM_{B}** d'effectuer la fonction **F_{B}.**

L'objet de l'invention vise donc à permettre de limiter la possibilité de transformation de données de type Tx en données de type Ty et la possibilité de transformation de données de type Ty en données de type Tx. A cet effet, l'objet de l'invention vise à mettre à disposition de la première catégorie d'utilisateurs C₁, au moins une unité **UTM_{A}** pour permettre de transformer une donnée de type Tx en donnée de type Ty avec une fonction **F_{A}.** De façon optionnelle, cette unité **UTM_{A}** comporte la possibilité de transformer une donnée de type Ty en donnée de type Tx avec la fonction **F_{B}.**

Les utilisateurs de la deuxième catégorie **C₂** disposent d'au moins une unité **UTM_{B}** capable d'assurer la transformation de données de type Ty en données de type Tx à l'aide de la fonction **F_{B}.** Toutefois, aucun utilisateur de cette deuxième catégorie **C₂** n'est capable d'effectuer la transformation de données de type Tx en données de type Ty avec la fonction **F_{A}.** Il apparaît ainsi possible de limiter la possibilité de transformation de données entre les utilisateurs de catégories différentes.

L'objet de l'invention est particulièrement utile dans le cas où les deux catégories d'utilisateurs **C₁** et **C₂** capables de faire des transformations de données, n'ont pas accès aux informations secrètes caractérisant ces transformations. Un tel objectif est atteint par l'utilisation d'unités de traitement et de mémorisation, telles que des clés matérielles sur le bus USB ou des cartes à puce. La seule possibilité pour un utilisateur d'une catégorie d'effectuer une transformation attribuée à un utilisateur de l'autre catégorie, est d'obtenir l'unité appartenant à ce dit utilisateur.

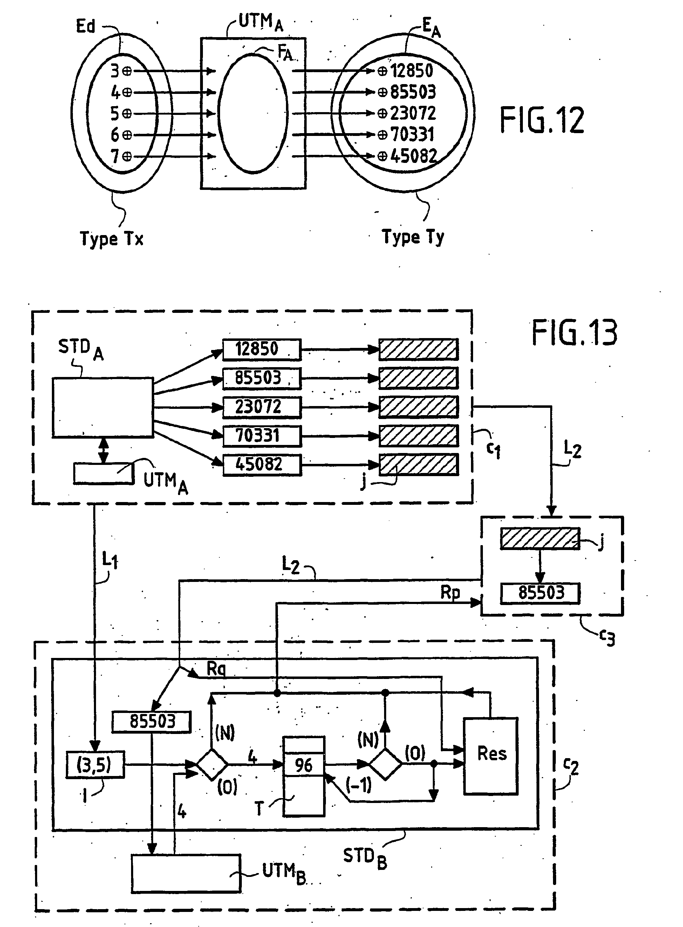

Les **fig. 12** et **13** sont des schémas respectivement de principe et applicatif, illustrant un exemple d'application de l'objet de l'invention permettant la génération et l'utilisation de données destinées à constituer des jetons de pré-paiment.

Tel que cela apparaît plus précisément à la **fig. 12****,** il est défini un ensemble de départ **E_{D}** dont les éléments sont des données de type Tx. L'ensemble de départ E_{D} comporte, dans l'exemple illustré, cinq éléments, à savoir : **3, 4, 5, 6, 7.** Chaque élément de l'ensemble de départ **E_{D}** correspond à un identifiant d'un client possédant un crédit de consommation de ressources, tel que par exemple un crédit de visualisation de pages WEB. Dans une phase de transformation de genre **A,** tous les éléments de l'ensemble de départ **E_{D}** sont transformés par la fonction **F_{A}** contenue dans l'unité **UTM_{A},** afin d'obtenir un ensemble d'arrivée **E_{A}** dont les éléments sont des données de type Ty. Dans l'exemple illustré, les éléments **3, 4, 5, 6, 7** sont transformés respectivement en : **12850, 85503, 23072, 70331, 45082.** Les données ainsi obtenues par la transformation réalisée dans l'unité **UTM_{A}** ne donnent aucune indication sur les éléments de l'ensemble de départ **E_{D}.**

Tel que cela apparaît plus précisément à la **fig. 13****,** chaque utilisateur appartenant à la première catégorie **C₁,** dispose d'une unité **UTM_{A}** et peut ainsi, à partir d'identifiants de départ connus, à savoir : **3, 4, 5, 6, 7** dans l'exemple illustré, obtenir des identifiants de jetons de pré-paiement, respectivement **12580, 85503, 23072, 70331, 45082.** De tels identifiants de jetons de pré-paiement peuvent, par exemple, être inscrits sur des jetons **j** pouvant être constitués par tout support approprié, tel que carte plastique ou coupon. Ces identifiants de jetons de pré-paiement sont, de préférence, masqués pour attester de la non utilisation de la ressource correspondant auxdits jetons.

De plus, des informations **I** permettant de caractériser l'ensemble de départ **E_{D},** sont transmises par une liaison **L₁,** à au moins un système **STD_{B}** appartenant à un utilisateur de la catégorie **C₂.** Dans le cas présent où l'ensemble de départ **E_{D}** est constitué d'entiers successifs, les informations **I** permettant de caractériser l'ensemble de départ **E_{D}** peuvent, par exemple, être la valeur du plus petit élément et le nombre d'éléments de l'ensemble, à savoir le couple **(3, 5).**

Dans l'exemple illustré, l'un des jetons **j** est transmis à un utilisateur de la catégorie **C₃,** qui devient ainsi un client possédant un crédit de consommation de ressources. Cette transmission est réalisée par tout moyen approprié, tel que par voie postale ou par remise en mains propres (partie d'une liaison **L₂).** Il est rappelé que chaque utilisateur de cette troisième catégorie **C₃** ne dispose ni d'unité **UTM_{A},** ni d'unité **UTM_{B}.**

Après avoir découvert l'identifiant de son jeton de pré-paiement, à savoir **85503** dans l'exemple illustré, l'utilisateur de la catégorie **C₃** transmet par une autre partie de la liaison **L₂** à un utilisateur de la deuxième catégorie **C₂,** l'identifiant transmis, ainsi qu'une requête **R_{q}** pour une ressource **Rₑₛ** à consommer. Il est rappelé que chaque utilisateur de la catégorie **C₂** dispose d'une unité **UTM_{B}** reliée à un système **STD_{B}.** L'identifiant transmis par l'utilisateur de la catégorie **C₃** au système **STD_{B}** est transféré à l'unité **UTM_{B},** de manière à assurer sa transformation, à l'aide de la fonction **F_{B}** contenue dans l'unité **UTM_{B},** en vue de retrouver l'identifiant de départ. Dans l'exemple illustré, l'unité **UTM_{B}** transfère ainsi au système **STD_{B}** l'identifiant de départ connu, à savoir **4,** correspondant au jeton de pré-paiement **85503.**

Le système **STD_{B}** utilise les informations **I** pour vérifier que l'élément transformé, à savoir 4 dans l'exemple illustré, appartient à l'ensemble de départ **E_{D}.** Cette vérification permet de s'assurer que le jeton de pré-paiement n'a pas été falsifié ou inventé. Ainsi, si l'identifiant n'est pas reconnu (N), la requête **R_{q}** est refusée, de sorte qu'une réponse **Rₚ** négative est envoyée à l'utilisateur de la catégorie **C₃.** Si la requête est acceptée (O), l'identifiant sert d'index dans un tableau **T** de ressources. Ce tableau **T** indique la quantité de crédits restants (96 dans l'exemple illustré) pour le client possédant le jeton de pré-paiement correspondant à l'identifiant **4.** Il est alors vérifié que les crédits restants sont suffisants pour la requête demandée. Dans le cas négatif (N), une réponse **Rₚ** négative est envoyée au client de la catégorie **C₃**. Dans le cas où les crédits sont suffisants (O), le tableau est mis à jour en soustrayant le coût de la ressource demandée, et la réponse **Rₚ** contenant la ressource demandée **Rₑₛ** est préparée puis délivrée au client de la catégorie **C₃.**

Dans l'exemple qui précède, il est à noter :
- qu'il y a plusieurs liaisons entre les systèmes **STD_{A}** et **STD_{B},** appelées **L₁, L₂,**
- que les utilisateurs de la catégorie **C₁** correspondent à des personnes pouvant émettre des jetons de pré-paiement,
- que les utilisateurs de la catégorie **C₂** correspondent à un prestataire de services souhaitant faire payer l'accès à des ressources **Rₑₛ,**
- que les utilisateurs de la catégorie **C₃** possédant au moins un jeton de pré-paiement, correspondent à des clients accédant éventuellement à des ressources payantes,
- que les utilisateurs de la catégorie **C₃** ne possédant pas de jetons de pré-paiement, ne peuvent pas être clients et donc accéder à des ressources payantes.

Dans l'exemple préféré décrit, l'invention vise à limiter la possibilité de transformation de données destinées à constituer des jetons de pré-paiement. Bien entendu, l'objet de l'invention peut être mis en oeuvre pour limiter la possibilité de transformation de données de nature différente, telles que par exemple, des messages de courrier électronique, des pages internet, etc.

L'invention n'est pas limitée aux exemples décrits et représentés, car diverses modifications peuvent y être apportées sans sortir de son cadre.

## Revendications

1. Procédé pour limiter, par l'intermédiaire d'au moins une unité de traitement et de mémorisation, la possibilité de transformation de données de départ de type T_{X} en données transformées de type T_{Y} et la possibilité de transformation de données transformées de type T_{Y} en données de départ de type T_{X}, la transformation des données de départ de type T_{X} en données transformées de type T_{Y} étant réalisée à l'aide d'une fonction (**F_{A}**) de transformation de genre A, tandis que la transformation des données transformées de type T_{Y} en données de départ de type T_{X} est réalisée à l'aide d'une fonction (**F_{B}**) de transformation de genre B inverse de la fonction (**F_{A}**) de transformation de genre A, les donnée étant mises en oeuvre sur au moins un système de traitement de données, **caractérisé en ce qu'**il consiste :
→ à utiliser un système (**STD_{A}**) de traitement de données de genre A et un système (**STD_{B}**) de traitement de données de genre B, le système (**STD_{A}**) étant un ordinateur ou un serveur et le système (**STD_{B}**) étant un ordinateur ou un serveur,
→ à mettre en place à au moins un moment, au moins une liaison (L) entre le système (**STD_{A}**) de traitement de données du genre A et le système (**STD_{B}**) de traitement de données de genre B, afin d'assurer le transfert d'au moins des données transformées de type T_{Y} du système (**STD_{A}**) de traitement de données du genre A vers le système (**STD_{B}**) de traitement de données du genre B et/ou d'assurer le transfert d'au moins des données de départ de type T_{X} du système (**STD_{B}**) de traitement de données de genre B vers le système (**STD_{A}**) de traitement de données du genre A,
→ dans une phase de personnalisation de genre A, à créer au moins une unité (**UTM_{A}**) de traitement et de mémorisation de genre A comportant des moyens de traitement et de mémorisation (A₃₁) aptes à stocker des données de manière secrète et à effectuer un traitement algorithmique dont une partie ou la totalité est secrète, cette unité (UTMA) étant constituée par une clé matérielle sur le bus USB du système STD_{A} ou par une carte à puce et comportant au moins la fonction (**F_{A}**) de transformation de genre A,
→ dans une phase de transformation de genre A :
• à définir un ensemble de départ (E_{D}) dont les éléments sont des données de départ de type T_{X},
• pour un utilisateur possédant au moins une unité (**UTM_{A}**) de traitement et de mémorisation de genre A et des données de départ de type T_{X} appartenant à l'ensemble de départ E_{D} à permettre:
- de transférer au moins une donnée de départ de type **T_{X}** du système (**STD_{A}**) de traitement de données de genre A à l'unité (**UTM_{A}**) de traitement et de mémorisation de genre A,
- de transformer dans l'unité (**UTM_{A}**) de traitement et de mémorisation de genre A, chaque donnée de départ de type T_{X} en donnée transformées de type T_{Y}, à l'aide de la fonction (F_{A}) de transformation de genre A,
- de transférer chaque donnée transformée de type T_{Y} de l'unité (UTM_{A}) de traitement et de mémorisation de genre A au système (STD_{A}) de traitement de données de genre A,
- d'obtenir les données transformées de type T_{Y},
• pour un utilisateur ne possédant pas d'unité (UTM_{A}) de traitement et de mémorisation de genre A, à ne pas pouvoir transformer une donnée de départ de type T_{X} en donnée transformées de type T_{Y}, avec la fonction (F_{A}) de transformation de genre A,
→ dans une phase de personnalisation de genre B, à créer au moins une unité (UTM_{B}) de traitement et de mémorisation de genre B comportant des moyens de traitement et de mémorisation (B₃₁) aptes à stocker des données de manière secrète et à effectuer un traitement algorithmique dont une partie ou la totalité est secrète, cette unité (UTM_{B}) étant constituée par une clé matérielle sur le bus USB du système STDb ou par une carte à puce et comportant la fonction (F_{B}) de transformation de genre B et ne comportant pas la fonction (F_{A}) de transformation de genre A,
→ et dans une phase de transformation de genre B :
• pour un utilisateur possédant une unité (UTM_{B}) de traitement et de mémorisation de genre B, des données transformées de type T_{Y} et ne possédant pas une unité (UTM_{A}) de traitement et de mémorisation de genre A,
- à permettre :
➢ de transférer au moins une donnée transformée de type T_{Y} du système (STD_{B}) de traitement de données de transformation de genre B, à unité. (UTM_{B}) de traitement et de mémorisation de genre B,
➢ de transformer dans l'unité (UTM_{B}) de traitement et de mémorisation de genre B, chaque donnée transformée de type T_{Y} en donnée de départ de type T_{X}, à l'aide de la fonction (F_{B}) de transformation de genre B
➢ de transférer chaque donnée de départ de type T_{X} de l'unité (UTM_{B}) de traitement et de mémorisation de genre B au système (STD_{B}) de traitement de données de genre B,
➢ d'obtenir les données de départ de type T_{X},
➢ de vérifier que les données de départ de type T_{X} appartiennent à l'ensemble de départ E_{D},
- à ne pas pouvoir transformer une donnée de départ type T_{X} en donnée transformée de type T_{Y} avec la fonction (F_{A}) de transformation de genre A.

2. Procédé selon la revendication 1, **caractérisé en ce qu'**il consiste, dans la phase de personnalisation de genre A, à créer une unité (UTM_{A}) de traitement et de mémorisation de genre A comportant aussi la fonction (F_{B}) de transformation de genre B inverse de la fonction (F_{A}) de transformation de genre A.

3. Procédé selon la revendication 1 ou 2, **caractérisé en ce qu'**il consiste :
• à utiliser dans l'unité (UTM_{A}) de traitement et de mémorisation de genre A en tant que fonction (F_{A}) de transformation de genre A, une fonction de cryptage à clé secrète (CS), ainsi qu'une information secrète (I_{CS}) servant de clé secrète pour cette fonction,
• et à utiliser dans l'unité (UTM_{B}) de traitement et de mémorisation de genre B et éventuellement dans l'unité (UTM_{A}) de traitement et de mémorisation de genre A, en tant que fonction (F_{B}) de transformation de genre B :
- une fonction de cryptage à clé secrète inverse (CSI), inverse de la fonction de cryptage à clé secrète (CS),
- et une information secrète (I_{CSI}) servant de clé secrète pour la fonction de cryptage à clé secrète inverse (CSI).

4. Procédé selon la revendication 1 ou 2, **caractérisé en ce qu'**il consiste :
• à utiliser dans l'unité (UTM_{A}) de traitement et de mémorisation de genre A, en tant que fonction (F_{A}) de transformation de genre A, une fonction d'encryptage à clé publique (CPU), ainsi qu'une information secrète (I_{CPU}) servant de clé publique pour cette fonction,
• et à utiliser dans l'unité (UTM_{B}) de traitement et de mémorisation de genre B et éventuellement dans l'unité (UTM_{A}) de traitement et de mémorisation de genre A, en tant que fonction (F_{B}) de transformation de genre B :
- une fonction de décryptage à clé privée (CPUI), inverse de la fonction d'encryptage à clé publique (CPU),
- et une information secrète (I_{CPUI}) servant de clé privée à la fonction de décryptage à clé privée (CPUI).

5. Procédé selon la revendication 1 ou 2, **caractérisé en ce qu'**il consiste :
• à utiliser, dans l'unité (**UTM_{A}**) de traitement et de mémorisation de genre A, en tant que fonction (**F_{A}**) de transformation de genre A, une fonction d'encryptage à clé privée (**CPR**), ainsi qu'une information secrète (**I_{CPR}**) servant de clé privée pour cette fonction,
• et à utiliser dans l'unité (U**TM_{B}**) de traitement et de mémorisation de genre B, et éventuellement dans l'unité (**UTM_{A}**) de traitement et de mémorisation de genre A, en tant que fonction (F_{B}) de transformation de genre B :
- une fonction de décryptage à clé publique (**CPRI**), inverse de la fonction d'encryptage à clé privée (**CPR**),
- et une information secrète (**I_{CPRI}**) servant de clé publique à la fonction de décryptage à clé publique (**CPRI**).

6. Procédé selon la revendication 3, 4 ou 5, **caractérisé en ce qu'**il consiste :
- à utiliser en tant que fonction (**F_{A}**) de transformation de genre A, une fonction additionnelle de transformation (**F_{ad}**) combinée à la fonction de cryptage à clé secrète (**CS**), à la fonction d'encryptage à clé publique (**CPU**), ou à la fonction d'encryptage à clé privée (**CPR**),
- et à utiliser en tant que fonction (**F_{B}**) de transformation de genre B, une fonction additionnelle de transformation inverse (**Fa_{dl}**) combinée à la fonction de cryptage à clé secrète inverse (**CSI**), à la fonction de décryptage à clé privée (**CPUI**), ou à la fonction de décryptage à clé publique (**CPRI**).

7. Procédé selon l'une des revendications 1 à 5, **caractérisé en ce qu'**il consiste :
• à utiliser en tant qu'unités **(UTM_{A}**) de traitement et de mémorisation de genre A et/ou unités (**UTM_{B}**) de traitement et de mémorisation de genre B, des unités de traitement et de mémorisation (**UTM**) comportant chacune des moyens algorithmiques (**110, 120**) nécessaires pour effectuer la fonction (**F_{A}**) de transformation de genre A et la fonction (**F_{B}**) de transformation de genre B,
• à inhiber:
- dans la phase de personnalisation de genre B, dans chaque unité (**UTM_{B}**) de traitement et de mémorisation de genre B, la possibilité d'utilisation de la fonction (**F_{A}**) de transformation de genre A,
- et éventuellement, dans la phase de personnalisation de genre A, dans chaque unité (**UTM_{A}**) de traitement et de mémorisation de genre A, la possibilité d'utilisation de la fonction (**F_{B}**) de transformation de genre B.

8. Procédé selon l'une des revendications 3, 4, 5 ou 6, **caractérisé en ce qu'**il consiste à générer un secret principal (**SP**) à partir duquel est déterminée une paire d'informations secrètes (**I_{CS}**, **I_{CSI}**) ou (**I_{CPU}**, **I_{CPUI}**) ou (I_{CPR}, I_{CPRI}) et éventuellement des paramètres (P_{ad}) pour la fonction additionnelle de transformation (**F**_{**ad**)} et les paramètres (**P_{adl}**) pour la fonction additionnelle de transformation inverse (**F_{adi}**).

9. Procédé selon la revendication 8, **caractérisé en ce qu'**il consiste à utiliser une méthode de secrets partagés (S₁, S₂, ..., Sₙ) pour générer le secret principal (**SP**).

10. Procédé selon la revendication 8 ou 9, **caractérisé en ce qu'**il consiste :
- à utiliser le secret principal (**SP**) pour générer au moins l'un des éléments des paires d'informations secrètes (**I_{CS}, I_{CSI}**) ou (**I_{CPI}, I_{CPUI}**) ou (I_{CPR}, I_{CPRI}), et éventuellement les paramètres (**P_{ad}**) pour la fonction additionnelle de transformation (**F_{ad}**) et les paramètres (**P_{adi}**) pour la fonction additionnelle de transformation inverse (F_{adi}),
- à personnaliser dans la phase de personnalisation de genre A, chaque unité (UTM_{A}) de traitement et de mémorisation de genre A en lui transférant :
• l'information secrète (**I_{CS}**) ou (**I_{CPU}**) ou (I_{CPR}), et éventuellement les paramètres (P_{ad}) pour la fonction additionnelle de transformation (F_{ad}) pour lui permettre d'effectuer la fonction (F_{A}) de transformation de genre A,
• et éventuellement, l'information secrète (I_{CSI}) ou (**I_{CPUI}**) ou (**I_{CPRI}**), et éventuellement les paramètres (**P_{adl}**) pour la fonction additionnelle de transformation inverse (**F_{adl}**) pour lui permettre d'effectuer la fonction (**F_{B}**) de transformation de genre B,
- à personnaliser dans la phase de personnalisation de genre B, chaque unités (**UTM_{B}**) de traitement et de mémorisation de genre B en lui transférant l'information secrète (**I_{CSI}**) ou (**I_{CPUI}**) ou (I_{CPRI}), et éventuellement les paramètres pour la fonction additionnelle de transformation inverse (**F_{adl}**) pour lui permettre d'effectuer la fonction (**F_{B}**) de transformation de genre B.

11. Procédé selon la revendication 1, **caractérisé en ce qu'**il consiste :
→ dans la phase de transformation de genre A :
- à transformer tous les éléments de l'ensemble de départ (**E_{D}**) par la fonction (**F_{A}**) de transformation de genre A contenue dans l'unité (**UTM_{A}**) de traitement et de mémorisation de genre A, afin d'obtenir un ensemble d'arrivée (**E_{A}**) dont les éléments sont des données de type T_{Y},
- à transférer du système (**STD_{A}**) de traitement de données de genre A vers le système (**STD_{B}**) de traitement de données de genre B à l'aide de la ou des liaison(s) (L) :
• des informations (I) permettant de caractériser l'ensemble de départ (E_{D}),
• et au moins un élément de l'ensemble d'arrivée (**E_{A}**),
→ et dans la phase de transformation de genre B, pour au moins un élément de l'ensemble d'arrivée (**E_{A}**) transféré du système (**STD_{A}**) de traitement de données de genre A vers le système (**STD_{B}**) de traitement de données de genre B :
- à le transformer à l'aide de la fonction (**F_{B}**) de transformation de gendre B contenue dans l'unité (**UTM_{B}**) de traitement et de mémorisation de genre B,
- et à vérifier, à l'aide des informations permettant de caractériser l'ensemble de départ (**E_{D}**), que cet élément transformé correspond à un élément de l'ensemble de départ (**E_{D}**),

12. Procédé selon la revendication 11, **caractérisé en ce qu'**il consiste à utiliser chaque élément de l'ensemble d'arrivée (**E_{A}**) pour constituer un jeton de pré-paiement (j).

13. Système pour limiter la possibilité de transformation de données de départ de type T_{X} en données transformées de type T_{Y} et la possibilité de transformation de données transformées de type T_{Y} en données de départ de type T_{X}, la transformation des données de départ de type T_{X} en données transformées de type T_{Y} étant réalisée à l'aide d'une fonction (F_{A}) de transformation de genre A, tandis que la transformation des données transformées de type T_{Y} en données de départ de type T_{X} est réalisée à l'aide d'une fonction (**F_{B}**) de transformation de genre B, inverse de la fonction (F_{A}) de transformation de genre A, **caractérisée en ce qu'**il comporte:
- au moins un système (**STD_{A}**) de traitement de données de genre A, le système (STD_{A}) étant un ordinateur ou un serveur,
- au moins un système (**STD_{B}**) de traitement de données de genre B, le système (STD_{B}) étant un ordinateur ou un serveur,
- au moins une liaison (L), à au moins un moment, entre le système (STD_{A}) de traitement de données de genre A et le système (**STD_{B}**) de traitement de données de genre B, afin d'assurer le transfert d'au moins des données transformées de données de genre B, afin d'assurer le transfert d'au moins des données transformées de type T_{Y} du système (**STD_{A}**) de traitement de données de genre A vers le système (**STD_{B}**) de traitement de données de genre B et/ou d'assurer le transfert d'au moins des données de départ de type T_{X} du système (**STD_{B}**) de traitement de données de genre B vers le système (**STD_{A}**) de traitement de données de genre A,
- au moins une unité des moyens de traitement et de mémorisation (A₃₁) aptes à stocker des données de manière secrète et à effectuer un traitement algorithmique dont une partie ou la totalité est secrète, cette unité (UTM_{A}) étant constituée par une clé matérielle sur le bus USB du système STB_{A} ou par une carte à puce et comportant la fonction (**F_{A}**) de transformation de genre A,
- des moyens pour définir au moins une donnée de départ de type T_{X} destinée à être transformée en donnée transformée de type T_{Y},
- des moyens pour transférer au moins une donnée de départ de Type T_{X} du système (STD_{A}) de traitement de donnée de genre A à l'unité (UTM_{A}) de traitement et de mémorisation de genre A,
- des moyens pour transformer dans l'unité **UTM_{A}**) de traitement et de mémorisation de genre A, chaque donnée de départ type T_{X} en donnée transformée de type T_{Y}, à l'aide de la fonction (**F_{A}**) de transformation de genre A,
- des moyens pour transférer chaque donnée transformée de type T_{Y} de l'unité (UTM_{A}) de traitement et de mémorisation de genre A au système (**STD_{A}**) de traitement de données de genre A,
- au moins une unité (**UTM_{B}**) de traitement et de mémorisation de genre B comportant des moyens de traitement et de mémorisation (**B₃₁**) aptes à stocker des données de manière secrète et à effectuer un traitement algorithmique dont une partie ou la totalité est secrète, cette unité (**UTM_{B}**) étant constituée par une clé matériel dont une partie ou la totalité sur le bus USB du système STDb ou par une carte à puce et comportant la fonction (F_{B}) de transformation de genre B et ne comportant pas la fonction (**F_{A}**) de transformation de genre A, en vue de ne pas pouvoir transformer une donnée de départ de type T_{X} en donnée transformée de type T_{Y} avec la fonction (**F_{A}**) de transformation de genre A,
- des moyens pour définir au moins une donnée transformée de type T_{Y} destinée à être transformée en donnée de départ de type T_{X},
- des moyens pour transférer au moins une donnée transformée de type T_{Y} du système (**STD_{B}**) de traitement de données de genre B à l'unité (**UTM_{B}**) de traitement et de mémorisation de genre B,
- des moyens pour transformer dans l'unité (**UTM_{B}**) de traitement et de mémorisation de genre B, chaque donnée transformée de type T_{Y} en donnée de départ de type T_{X}, à l'aide de la fonction (**F_{B}**) de transformation de genre B,
- et des moyens pour transférer chaque donnée de départ de type T_{X} de l'unité (**UTM_{B}**) de traitement et de mémorisation de genre B au système (**STD_{B}**) de traitement de données de genre B.

14. Système selon la revendication 13, **caractérisé en ce que** l'unité (**UTM_{A}**) de traitement et de mémorisation de genre A comporte aussi la fonction (**F_{B}**) de transformation de genre B inverse de la fonction (**F_{A}**) de transformation de genre A.

15. Système selon la revendication 13 ou 14, **caractérisé en ce que** :
- l'unité (**UTM_{A}**) de traitement et de mémorisation de genre A comporte en tant que fonction (**F_{A}**) de transformation de genre A, une fonction de cryptage à clé secrète (**CS**), ainsi qu'une information secrète (**I_{CS}**) servant de clé secrète pour cette fonction,
- et **en ce que** l'unité (**UTM_{B}**) de traitement et de mémorisation de genre B et éventuellement l'unité (**UTM_{A}**) de traitement et de mémorisation de genre A, comporte en tant que fonction (**F_{B}**) de transformation de genre B :
- une fonction de cryptage à clé secrète inverse (CSI), inverse de la fonction de cryptage à clé secrète (CS),
- et une information secrète (**I_{CSI}**) servant de clé secrète pour la fonction de cryptage à clé secrète inverse (**CSI**).

16. Dispositif pour personnaliser des unités de traitement et de mémorisation (**UTM**) utilisées dans un système conforme à l'une des revendications 13 à 15, **caractérisé en ce qu'**il comporte des moyens pour personnaliser :
- au moins une unité (**UTM_{A}**) de traitement et de mémorisation de genre A comportant la fonction (**F_{A}**) de transformation de genre A et éventuellement la fonction (**F_{B}**) de transformation de genre B,
- et/ou au moins une unité (**UTM_{B}**) de traitement et de mémorisation de genre B comportant la fonction (**F_{B}**) de transformation de genre B et ne comportant pas la fonction (**F_{A}**) de transformation de genre A.

17. Dispositif selon la revendication 16, **caractérisé en ce qu'**il comporte, pour des unités de traitement et de mémorisation (**UTM**) comprenant chacune la possibilité d'effectuer la fonction (**F_{A}**) de transformation de genre A et la fonction (**F_{B}**) de transformation de genre B, des moyens d'inhibition adaptés pour inhiber :
- dans chaque unité (**UTM_{B}**) de traitement et de mémorisation de genre B, l'utilisation de la fonction (**F_{A}**) de transformation de genre A,
- et éventuellement dans chaque unité (**UTM_{A}**) de traitement et de mémorisation de genre A, l'utilisation de la fonction (**F_{B}**) de transformation de genre B.

## Claims

1. A method for limiting, by means of at least one processing and storage unit, the possibility of transforming type-Tx start data into type-Ty transformed data and the possibility of transforming type-Ty transformed data into type-Tx start data, the transformation of the type-Tx start data into type-Ty transformed data being carried out by means of a type-A transformation function (F_{A}), whereas the transformation of the type-Ty transformed data into type-Tx start data is carried out by means of an inverse type-B transformation function (F_{B}) of the type-A transformation function (F_{A}), the data being employed on at least one data-processing system, **characterised in that** it consists of:
- using a type-A data-processing system (STD_{A}) and a type-B data-processing system (STD_{B}), the system (STD_{A}) being a computer or a server and the system (STD_{B}) being a computer or a server,
- putting in place at least at one moment at least one link (L) between the type-A data-processing system (STD_{A}) and the type-B data-processing system (STD_{B}) to ensure the transfer of at least the type-Ty transformed data from the type-A data-processing system (STD_{A}) to the type-B data-processing system (STD_{B}) and/or to ensure the transfer of at least the type-Tx start data from the type-B data-processing system (STD_{B}) to the type-A data-processing system (STD_{A}),
- in a type-A personalisation phase creating at least one type-A processing and storage unit (UTM_{A}) comprising processing and storage means (A3_{A}) suitable for storing data secretly and carrying out algorithmic processing, part of which or all of which is secret, this unit (UTM_{A}) being constituted by a material key on the USB bus of the STD_{A} system or by part of a chip card, and comprising at least the type-A transformation function (F_{A}),
- in a type-A transformation phase, creating at least one type-B processing and storage unit (UTM_{B}) comprising the type-B transformation function (F_{B}) and not comprising the type-A transformation function (F_{A}):
- in a type-A transformation phase:
- for defining a starting example (E_{D}) whereof the elements have Tx-type starting data,
- for a user having at least one type-A processing and storage unit (UTM_{A}) and the type-Tx starting data belonging to the starting example E_{D}, to allow:
- transferring at least one type-Tx starting datum from the type-A data-processing system (STD_{A}) to the type-A processing and storage unit (UTM_{A}),
- transforming in the type-A processing and storage unit (UTM_{A}), each type-Tx starting datum into a type-Ty transformed datum, by means of the type-A transformation function (F_{A}),
- transferring each type-Ty transformed datum from the type-A processing and storage unit (UTM_{A}) to the type-A data-processing system (STD_{A}),
- obtaining type-Ty transformed data,
- for a user not having a type-A processing and storage unit (UTM_{A}), not being able to transform a type-Tx starting datum into type-Ty transformed datum, with the type-A transformation function (F_{A}),
- in a type-B personalisation phase, creating at least one type-B processing and storage unit (UTM_{B}) comprising processing and storage means (B3_{A}) suitable for storing data secretly and carrying out algorithmic processing, part of which or all of which is secret, this unit (UTM_{B}) being constituted by a material key on the USB bus of the STD_{B} system or by part of a chip card, and comprising the type-B transformation function (F_{B}) and not comprising the type-A transformation function (F_{A}),
- and in a type-B transformation phase:
- for a user having a type-B processing and storage unit (UTM_{B}), type-Ty transformed data, and not having a type-A processing and storage unit (UTM_{A}),
- to allow:
- transferring at least one type-Ty transformed datum from the type-B data-processing and transformation system (STD_{B}) to the type-B processing and storage unit (UTM_{B}),
- transforming in the type-B processing and storage unit (UTM_{B}), each type-Ty transformed datum into a type-Tx starting datum, by means of the type-B transformation function (F_{B}),
- transferring each type-Tx starting datum from the type-B processing and storage unit (UTM_{B}) to the type-B data-processing system (STD_{B}),
- obtaining Tx-type starting data,
- verifying that the Tx-type starting data belong to the starting set E_{D},
- not being able to transform a type-Tx starting datum into a type-Ty transformed datum with the type-A transformation function (F_{A}).

2. The method as claimed in Claim 1, **characterised in that** it consists of, in the type-A personalisation phase, creating a type-A processing and storage unit (UTM_{A}) also comprising the inverse type-B transformation function (F_{B}) of the type-A transformation function (F_{A}).

3. The method as claimed in Claim 1 or 2, **characterised in that** it consists of:
- using in the type-A processing and storage unit (UTM_{A}) as type-A transformation function (F_{A}) a secret key encryption function (CS), as well as 'secret information (I_{CS}) serving as a secret key for this function,
- and using in the type-B processing and storage unit (UTM_{B}) and optionally in the type-A processing and storage unit (UTM_{A}) as a type-B transformation function (F_{B}):
- an inverse secret key encryption function (CSI), inverse of the secret key encryption function (CS),
- and secret information (I_{CSI}) serving as a secret key for the inverse secret key encryption function (CSI).

4. The method as claimed in Claim 1 or 2, **characterised in that** it consists of:
- using in the type-A processing and storage unit (UTM_{A}), as type-A transformation function (F_{A}), a public key encryption function (CPU), as well as secret information (I_{CPU}) serving as a public key for this function,
- and using in the type-B processing and storage unit (UTM_{B}) and optionally in the type-A processing and storage unit (UTM_{A}), as type-B transformation function (F_{B}):
- a private key decryption function (CPUI), inverse of the public key encryption function (CPU),
- and secret information (I_{CPUI}) serving as private key with the private key decryption function (CPUI).

5. The method as claimed in Claim 1 or 2, **characterised in that** it consists of:
- using, in the type-A processing and storage unit (UTM_{A}), as type-A transformation function (F_{A}), a private key encryption function (CPR), as well as secret information (I_{CPR}) serving as private key for this function,
- and using in the type-B processing and storage unit (UTM_{B}), and optionally in the type-A processing and storage unit (UTM_{A}), as type-B transformation function (F_{B}):
- a public key decryption function (CPRI), inverse of the private key encryption function (CPR),
- and secret information (I_{CPRI}) serving as public key with the public key decryption function (CPRI).

6. The method as claimed in Claim 3, 4 or 5, **characterised in that** it consists of:
- using as type-A transformation function (F_{A}) an additional transformation function (F_{ad}) combined with the secret key encryption function (CS), the public key encryption function (CPU), or with the private key encryption function (CPR),
- and using as type-B transformation function (F_{B}) an inverse additional transformation function (F_{adi}) combined with the inverse secret key encryption function (CSI), the private key decryption function (CPUI), or with the public key decryption function (CPRI).

7. The method as claimed in any one of Claims 1 to 5, **characterised in that** it consists of:
- using as type-A processing and storage units (UTM_{A}) and/or type-B processing and storage units (UTM_{B}) processing and storage units (UTM) each comprising algorithmic means (110, 120) necessary for carrying out the type-A transformation function (F_{A}) and the type-B transformation function (F_{B}), for inhibiting:
- in the type-B personalisation phase, in each type-B processing and storage unit (UTM_{B}), the possibility of using the type-A transformation function (F_{A}),
- and optionally, in the type-A personalisation phase, in each type-A processing and storage unit (UTM_{A}), the possibility of using of the type-B transformation function (F_{B}).

8. The method as claimed in any one of Claims 3, 4, 5 or 6, **characterised in that** it consists of generating a main secret (SP) from which is determined a pair of secret information items (I_{CS}, I_{CSI}) or (I_{CPU}, I_{CPUI}) or (I_{CPR}, I_{CPRI}) and optionally parameters (P_{ad}) for the additional transformation function (F_{ad}) and the parameters (P_{adl}) for the inverse additional transformation function (F_{adi}).

9. The method as claimed in Claim 8, **characterised in that** it consists of using a method of shared secrets (S₁, S₂,..., Sᵤ) for generating the main secret (SP).

10. The method as claimed in Claim 8 or 9, **characterised in that** it consists of:
- using the main secret (SP) for generating at least one of the elements of the pairs of secret information items (I_{CS}, I_{CSI}) or (I_{CPU}, I_{CPUI}) or (I_{CPR}, I_{CPRI}), and optionally the parameters (P_{ad}) for the additional transformation function (F_{ad}) and the parameters (P_{adi}) for the inverse additional transformation function (F_{adi}),
- personalising in the type-A personalisation phase each type-A processing and storage unit (UTM_{A}) by transferring to it:
- the secret information (I_{CS}) or (I_{CPU}) or (I_{CPR}), and optionally the parameters (P_{ad}) for the additional transformation function (F_{ad}) to allow it to carry out the type-A transformation function (F_{A}),
- and optionally, the secret information (I_{CSI}) or (I_{CPUI}) or (I_{CPRI}), and optionally the parameters (P_{adi}) for the inverse additional transformation function (F_{adi}) to allow it to carry out the type-B transformation function (F_{B}),
- personalising in the type-B personalisation phase each type-B processing and storage unit (UTM_{B}) by transferring to it the secret information (I_{CSI}) or (I_{CPUI}) or (I_{CPRI}), and optionally the parameters for the inverse additional transformation function (F_{adi}) to allow it to carry out the type-B transformation function (F_{B}).

11. The method as claimed in Claim 1, **characterised in that** it consists of:
in the type-A transformation phase:
- transforming all the elements of the starting set (E_{D}) by the type-A transformation function (F_{A}) contained in the type-A processing and storage unit (UTM_{A}), to obtain an incoming set (E_{A}) whereof the elements are type-Ty data,
- transferring from the type-A data-processing system (STD_{A}) to the type-B data-processing system (STD_{B}) by means of the link(s) (L):
- information (I) for characterising the starting set (E_{D}),
- and at least one element of the incoming set (E_{A}),
- and in the type-B transformation phase, for at least one element of the incoming set (E_{A}) transferred from the type-A data-processing system (STD_{A}) to the type-B data-processing system (STD_{B}):
- transforming it by means of the type-B transformation function (F_{B}) contained in the type-B processing and storage unit (UTM_{B}),
- and verifying, by means of this information for characterising the starting set (E_{D}), that this transformed set corresponds to an element of the starting set (E_{D}).

12. The method as claimed in Claim 11, **characterised in that** it consists of using each element of the incoming set (E_{A}) to constitute a prepayment token (j).

13. A system for limiting the possibility of transforming type-Tx starting data into type-Ty transformed data and the possibility of transforming type-Ty transformed data into type-Tx starting data, the transformation of type-Tx starting data into type-Ty transformed data being carried out by means of a type-A transformation function (F_{A}), whereas the transformation of the type-Ty transformed data into type-Tx starting data is carried out by means of a type-B transformation function (F_{B}), inverse of the type-A transformation function (F_{A}), **characterised in that** it comprises:
- at least one type-A data-processing system (STD_{A}), the system (STD_{A}) being a computer or a server,
- at least one type-B data-processing system (STD_{B}), the system (STD_{B}) being a computer or a server,
- at least one link (L), at least at one moment, between the type-A data-processing system (STD_{A}) and the type-B data-processing system (STD_{B}), to ensure the transfer of at least the type-Ty transformed data from the type-A data-processing system (STD_{A}) to the type-B data-processing system (STD_{B}) and/or to ensure the transfer of at least the type-Tx starting data from the type-B data-processing system (STD_{B}) to the type-A data-processing system (STD_{A}),
- at least one type-A processing and storage unit (UTM_{A}) comprising processing and storage means (A3_{A}) suitable for storing data secretly and carrying out algorithmic processing, part of which or all of which is secret, this unit (UTM_{A}) being constituted by a material key on the USB bus of the STD_{A} system or by part of a chip card, and comprising at least the type-A transformation function (F_{A}),
- means for defining at least one type-Tx starting datum intended to be transformed into a type-Ty transformed datum,
- means for transferring at least one type-Tx starting datum from the type-A data-processing system (STD_{A}) to the type-A processing and storage unit (UTM_{A}),
- means for transforming in the type-A processing and storage unit (UTM_{A}), each type-Tx starting datum into a type-Ty transformed datum, by means of the type-A transformation function (F_{A}),
- means for transferring each type-Ty transformed datum from the type-A processing and storage unit (UTM_{A}) to the type-A data-processing system (STD_{A}),
- at least one type-8 processing and storage unit (UTM_{B}) comprising processing and storage means (B3_{A}) suitable for storing data secretly and carrying out algorithmic processing, part of which or all of which is secret, this unit (UTM_{B}) being constituted by a material key on the USB bus of the STD_{A} system or by part of a chip card, and comprising the type-B transformation function (F_{B}) and not comprising the type-A transformation function (F_{A}), in light of not being able to transform a type-Tx starting datum into a type-Ty transformed datum with the type-A transformation function (F_{A}),
- means for defining at least one type-Ty transformed datum intended to be transformed into a type-Tx starting datum,
- means for transferring at least one type-Ty transformed datum from the type-B data-processing system (STD_{B}) to the type-B processing and storage unit (UTM_{B}),
- means for transforming in the type-B processing and storage unit (UTM_{B}) each type-Ty transformed datum into a type-Tx starting datum, by means of the type-B transformation function (F_{B}),
- and means for transferring each type-Tx starting datum from the type-B processing and storage unit (UTM_{B}) to the type-B data-processing system (STD_{B}).

14. The system as claimed in Claim 13, **characterised in that** the type-A processing and storage unit (UTM_{A}) also comprises the type-B inverse transformation function (F_{B}) of the type-A transformation function (F_{A}).

15. The system as claimed in Claim 13 or 14, **characterised in that**:
- the type-A processing and storage unit (UTM_{A}) comprises as type-A transformation function (F_{A}) a secret key encryption function (CS), as well as secret information (I_{CS}) serving as a secret key for this function,
- and **in that** the type-B processing and storage unit (UTM_{B}) and optionally the type-A processing and storage unit (UTM_{A}), comprises as type-B transformation function (F_{B}):
- an inverse secret key encryption function (CSI), inverse of the secret key encryption function (CS),
- and secret information (I_{CSI}) serving as a secret key for the inverse secret key encryption function (CSI).

16. A device for personalising the processing and storage units (UTM) used in a system as claimed in any one of Claims 13 to 15, **characterised in that** it comprises means for personalising:
- at least one type-A processing and storage unit (UTM_{A}) comprising the type-A transformation function (F_{A}) and optionally the type-B transformation function (F_{B}),
- and/or at least one type-B processing and storage unit (UTM_{B}) comprising the type-B transformation function (F_{B}) and not comprising the type-A transformation function (F_{A}),

17. The device as claimed in Claim 16, **characterised in that** it comprises, for processing and storage units (UTM) each comprising the possibility of carrying out the type-A transformation function (F_{A}) and the type-B transformation function (F_{B}), inhibition means adapted for inhibiting:
- in each type-B processing and storage unit (UTM_{B}) the use of the type-A transformation function (F_{A}),
- and optionally in each type-A processing and storage unit (UTM_{A}) the use of the type-B transformation function (F_{B}).

## Patentansprüche

1. Verfahren, um mittels wenigstens einer Verarbeitungs- und Speichereinheit die Möglichkeit der Transformation von Ausgangsdaten des Typs T_{X} in transformierte Daten des Typs T_{Y} sowie die Möglichkeit der Transformation von transformierten Daten des Typs T_{Y} in Ausgangsdaten des Typs T_{X} zu begrenzen, wobei die Transformation der Ausgangsdaten des Typs T_{X} in transformierte Daten des Typs T_{Y} mit Hilfe einer Transformationsfunktion (F_{A}) der Art A durchgeführt wird, während die Transformation der transformierten Daten des Typs T_{Y} in Ausgangsdaten des Typs T_{X} mit Hilfe einer zur Transformationsfunktion (F_{A}) der Art A inversen Transformationsfunktion (F_{B}) der Art B durchgeführt wird, wobei die Daten an wenigstens einem Datenverarbeitungssystem eingesetzt werden, **dadurch gekennzeichnet, daß** es darin besteht:
→ ein Datenverarbeitungssystem (STD_{A}) der Art A sowie ein Datenverarbeitungssystem (STD_{B}) der Art B zu verwenden, wobei das System (STD_{A}) ein Computer oder ein Server und das System (STD_{B}) ein Computer oder ein Server ist,
→ zu wenigstens einem Zeitpunkt wenigstens eine Verbindung (L) zwischen dem Datenverarbeitungssystem (STD_{A}) der Art A und dem Datenverarbeitungssystem (STD_{B}) der Art B einzurichten, um die Übertragung wenigstens der transformierten Daten des Typs T_{Y} von dem Datenverarbeitungssystem (STD_{A}) der Art A zu dem Datenverarbeitungssystem (STD_{B}) der Art B zu gewährleisten und/oder um die Übertragung von wenigstens den Ausgangsdaten des Typs T_{X} von dem Datenverarbeitungssystem (STD_{B}) der Art B zu dem Datenverarbeitungssystem (STD_{A}) der Art A sicherzustellen,
→ in einer Personalisierungsphase der Art A wenigstens eine Verarbeitungs- und Speichereinheit (UTM_{A}) der Art A zu erzeugen, die Verarbeitungs- und Speichermittel (A₃₁) umfaßt, welche geeignet sind, Daten geheim zu speichern und eine algorithmische Verarbeitung durchzuführen, die teilweise oder vollkommen geheim ist, wobei diese Einheit (UTM_{A}) von einem Hardwareschlüssel auf dem USB-Bus des Systems STD_{A} oder von einer Chipkarte gebildet ist und wenigstens die Transformationsfunktion (F_{A}) der Art A umfaßt,
→ in einer Transformationsphase der Art A:
• eine Ausgangseinheit (E_{D}) zu definieren, deren Elemente Ausgangsdaten des Typs Tx sind,
• bei einem Benutzer, der wenigstens eine Verarbeitungs- und Speichereinheit (UTM_{A}) der Art A sowie zu der Ausgangseinheit (E_{D}) gehörende Ausgangsdaten des Typs T_{X} besitzt, zu ermöglichen:
- wenigstens eine der Ausgangsdaten des Typs T_{X} von dem Datenverarbeitungssystem (STD_{A}) der Art A an die Verarbeitungs- und Speichereinheit (UTM_{A}) der Art A zu übertragen,
- in der Verarbeitungs- und Speichereinheit (UTM_{A}) der Art A jede der Ausgangsdaten des Typs T_{X} mit Hilfe der Transformationsfunktion (F_{A}) der Art A in transformierte Daten des Typs T_{Y} zu transformieren,
- jede der transformierten Daten des Typs T_{Y} von der Verarbeitungs- und Speichereinheit (UTM_{A}) der Art A an das Datenverarbeitungssystem (STD_{A}) der Art A zu übertragen,
- die transformierten Daten des Typs T_{Y} zu erhalten,
• bei einem Benutzer, der keine Verarbeitungs- und Speichereinheit (UTM_{A}) der Art A besitzt, keine der Ausgangsdaten des Typs T_{X} mit der Transformationsfunktion (F_{A}) der Art A in transformierte Daten des Typs T_{Y} transformieren zu können,
→ in einer Personalisierungsphase der Art B wenigstens eine Verarbeitungs- und Speichereinheit (UTM_{B}) der Art B zu erzeugen, die Verarbeitungs- und Speichermittel (B₃₁) umfaßt, welche geeignet sind, Daten geheim zu speichern und eine algorithmische Verarbeitung durchzuführen, die teilweise oder vollkommen geheim ist, wobei diese Einheit (UTM_{B}) von einem Hardwareschlüssel auf dem USB-Bus des Systems STD_{B} oder von einer Chipkarte gebildet ist und die Transformationsfunktion (F_{B}) der Art B und nicht die Transformationsfunktion (F_{A}) der Art A umfaßt,
→ und in einer Transformationsphase der Art B:
• bei einem Benutzer, der eine Verarbeitungs- und Speichereinheit (UTM_{B}) der Art B, transformierte Daten des Typs T_{Y} und keine Verarbeitungs- und Speichereinheit (UTM_{A}) der Art A besitzt,
- zu ermöglichen:
» wenigstens eine der transformierten Daten des Typs T_{Y} von dem Transformationsdatenverarbeitungssystem (STD_{B}) der Art B an die Verarbeitungs- und Speichereinheit (UTM_{B}) der Art B zu übertragen,
» in der Verarbeitungs- und Speichereinheit (UTM_{B}) der Art B jede der transformierten Daten des Typs T_{Y} mit Hilfe der Transformationsfunktion (F_{B}) der Art B in Ausgangsdaten des Typs T_{X} zu transformieren,
» jede der Ausgangsdaten des Typs TX von der Verarbeitungs- und Speichereinheit (UTM_{B}) der Art B an das Datenverarbeitungssystem (STD_{B}) der Art B zu übertragen,
» die Ausgangsdaten des Typs T_{X} zu erhalten,
» nachzuweisen, daß die Ausgangsdaten des Typs T_{X} zu der Ausgangseinheit E_{D} gehören,
- keine Daten des Typs T_{X} mit der Transformationsfunktion (F_{A}) der Art A in transformierte Daten des Typs T_{Y} transformieren zu können.

2. Verfahren nach Anspruch 1, **dadurch gekennzeichnet, daß** es darin besteht, in der Personalisierungsphase der Art A eine Verarbeitungs- und Speichereinheit (UTM_{A}) der Art A zu erzeugen, die ebenfalls die zu der Transformationsfunktion (F_{A}) der Art A inverse Transformationsfunktion (F_{B}) der Art B umfaßt.

3. Verfahren nach Anspruch 1 oder 2, **dadurch gekennzeichnet, daß** es darin besteht:
• in der Verarbeitungs- und Speichereinheit (UTM_{A}) der Art A als Transformationsfunktion (F_{A}) der Art A eine Verschlüsselungsfunktion mit Geheimschlüssel (CS) sowie eine Geheiminformation (I_{CS}), die dieser Funktion als Geheimschlüssel dient, zu verwenden,
• und in der Verarbeitungs- und Speichereinheit (UTM_{B}) der Art B sowie eventuell in der Verarbeitungs- und Speichereinheit (UTM_{A}) der Art A als Transformationsfunktion (F_{B}) der Art B folgendes zu verwenden:
- eine Verschlüsselungsfunktion mit inversem Geheimschlüssel (CSI), welche zu der Verschlüsselungsfunktion mit Geheimschlüssel (CS) invers ist,
- und eine Geheiminformation (I_{CSI}), welche der Verschlüsselungsfunktion mit inversem Geheimschlüssel (CSI) als Geheimschlüssel dient.

4. Verfahren nach Anspruch 1 oder 2, **dadurch gekennzeichnet, daß** es darin besteht:
• in der Verarbeitungs- und Speichereinheit (UTM_{A}) der Art A als Transformationsfunktion (F_{A}) der Art A eine Verschlüsselungsfunktion mit öffentlichem Schlüssel (CPU) sowie eine Geheiminformation (I_{CPU}), die dieser Funktion als öffentlicher Schlüssel dient, zu verwenden,
• und in der Verarbeitungs- und Speichereinheit (UTM_{B}) der Art B sowie eventuell in der Verarbeitungs- und Speichereinheit (UTM_{A}) der Art A als Transformationsfunktion (F_{B}) der Art B folgendes zu verwenden:
- eine zu der Verschlüsselungsfunktion mit öffentlichem Schlüssel (CPU) inverse Entschlüsselungsfunktion mit privatem Schlüssel (CPUI),
- und eine Geheiminformation (I_{CPUI}), welche der Entschlüsselungsfunktion mit privatem Schlüssel (CPUI) als privater Schlüssel dient.

5. Verfahren nach Anspruch 1 oder 2, **dadurch gekennzeichnet, daß** es darin besteht:
• in der Verarbeitungs- und Speichereinheit (UTM_{A}) der Art A als Transformationsfunktion (F_{A}) der Art A eine Verschlüsselungsfunktion mit privatem Schlüssel (CPR) sowie eine Geheiminformation (I_{CPR}), die dieser Funktion als privater Schlüssel dient, zu verwenden,
• und in der Verarbeitungs- und Speichereinheit (UTM_{B}) der Art B sowie eventuell in der Verarbeitungs- und Speichereinheit (UTM_{A}) der Art A als Transformationsfunktion (F_{B}) der Art B folgendes zu verwenden:
- eine zu der Verschlüsselungsfunktion mit privatem Schlüssel (CPR) inverse Entschlüsselungsfunktion mit öffentlichem Schlüssel (CPRI),
- und eine Geheiminformation (I_{CPRI}), welche der Entschlüsselungsfunktion mit öffentlichem Schlüssel (CPRI) als öffentlicher Schlüssel dient.

6. Verfahren nach Anspruch 3, 4 oder 5, **dadurch gekennzeichnet, daß** es darin besteht:
- als Transformationsfunktion (F_{A}) der Art A eine zusätzliche Transformationsfunktion (F_{ad}) zu verwenden, die mit der Verschlüsselungsfunktion mit Geheimschlüssel (CS), mit der Verschlüsselungsfunktion mit öffentlichem Schlüssel (CPU) oder mit der Verschlüsselungsfunktion mit privatem Schlüssel (CPR) kombiniert wird,
- und als Transformationsfunktion (F_{B}) der Art B eine zusätzliche inverse Transformationsfunktion (F_{adi}) zu verwenden, die mit der Verschlüsselungsfunktion mit inversem Geheimschlüssel (CSI), mit der Entschlüsselungsfunktion mit privatem Schlüssel (CPUI) oder mit der Entschlüsselungsfunktion mit öffentlichem Schlüssel (CPRI) kombiniert wird.

7. Verfahren nach einem der Ansprüche 1 bis 5, **dadurch gekennzeichnet, daß** es darin besteht:
• als Verarbeitungs- und Speichereinheiten (UTM_{A}) der Art A und/oder als Verarbeitungs- und Speichereinheiten (UTM_{B}) der Art B Verarbeitungs- und Speichereinheiten (UTM) zu verwenden, die jeweils algorithmische Mittel (110, 120) aufweisen, die erforderlich sind, um die Transformationsfunktion (F_{A}) der Art A und die Transformationsfunktion (F_{B}) der Art B auszuführen.
• folgendes zu sperren:
- in der Personalisierungsphase der Art B, in jeder Verarbeitungs- und Speichereinheit (UTM_{B}) der Art B, die Möglichkeit der Verwendung der Transformationsfunktion (F_{A}) der Art A,
- und eventuell in der Personalisierungsphase der Art A, in jeder Verarbeitungs- und Speichereinheit (UTM_{A}) der Art A, die Möglichkeit der Verwendung der Transformationsfunktion (F_{B}) der Art B.

8. Verfahren nach einem der Ansprüche 3, 4, 5 oder 6, **dadurch gekennzeichnet, daß** es darin besteht, ein Hauptgeheimnis (SP) zu erzeugen, anhand dessen ein Paar geheimer Informationen (I_{CS}, I_{CSI}) oder (I_{CPU}, I_{CPUI}) oder (I_{CPR}, I_{CPRI}) sowie eventuell Parameter (P_{ad}) für die zusätzliche Transformationsfunktion (F_{ad}) und Parameter (P_{adi}) für die zusätzliche inverse Transformationsfunktion (F_{adi}) festgelegt werden.

9. Verfahren nach Anspruch 8, **dadurch gekennzeichnet, daß** es darin besteht, zur Erzeugung des Hauptgeheimnisses (SP) ein Verfahren geteilter Geheimnisse (S₁, S₂, ..., Sₙ) zu verwenden.

10. Verfahren nach Anspruch 8 oder 9, **dadurch gekennzeichnet, daß** es darin besteht:
- das Hauptgeheimnis (SP) zu verwenden, um wenigstens eines der Elemente der Paare geheimer Informationen (I_{CS}, I_{CSI}) oder (I_{CPU}, I_{CPUI}) oder (I_{CPR}, I_{CPRI}) sowie eventuell die Parameter (P_{ad}) für die zusätzliche Transformationsfunktion (F_{ad}) und die Parameter (P_{adi}) für die zusätzliche inverse Transformationsfunktion (F_{adi}) zu erzeugen,
- in der Personalisierungsphase der Art A jede Verarbeitungs- und Speichereinheit (UTM_{A}) der Art A dadurch zu personalisieren, daß:
• die geheime Information (I_{CS}) oder (I_{CPU}) oder (I_{CPR}) sowie eventuell die Parameter (P_{ad}) für die zusätzliche Transformationsfunktion (F_{ad}) an sie übertragen werden, um ihr zu ermöglichen, die Transformationsfunktion (F_{A}) der Art A durchzuführen,
• und eventuell die geheime Information (I_{CSI}) oder (I_{CPUI}) oder (I_{CPRI}) sowie eventuell die Parameter (P_{adi}) für die zusätzliche inverse Transformationsfunktion (F_{adi}) an sie übertragen werden, um ihr zu ermöglichen, die Transformationsfunktion (F_{B}) der Art B durchzuführen,
- in der Personalisierungsphase der Art B jede Verarbeitungs- und Speichereinheit (UTM_{B}) der Art B dadurch zu personalisieren, daß die geheime Information (I_{CSI}) oder (I_{CPUI}) oder (I_{CPRI}) sowie eventuell die Parameter für die zusätzliche inverse Transformationsfunktion (F_{adi}) an sie übertragen werden, um ihr zu ermöglichen, die Transformationsfunktion (F_{B}) der Art B durchzuführen.

11. Verfahren nach Anspruch 1, **dadurch gekennzeichnet, daß** es darin besteht:
→ in der Transformationsphase der Art A:
- alle Elemente der Ausgangseinheit (E_{D}) mittels der in der Verarbeitungs- und Speichereinheit (UTM_{A}) der Art A enthaltenen Transformationsfunktion (F_{A}) der Art A zu transformieren, um eine Eingangseinheit (E_{A}) zu erhalten, deren Elemente Daten des Typs T_{Y} sind,
- von dem Datenverarbeitungssystem (STD_{A}) der Art A zu dem Datenverarbeitungssystem (STD_{B}) der Art B mit Hilfe der Verbindung oder Verbindungen (L) folgendes zu übertragen:
• Informationen (I), die ermöglichen, die Ausgangseinheit (E_{D}) zu charakterisieren,
• sowie wenigstens ein Element der Eingangseinheit (E_{A}),
→ und in der Transformationsphase der Art B, für wenigstens ein Element der Eingangseinheit (E_{A}), das von dem Datenverarbeitungssystem (STD_{A}) der Art A zu dem Datenverarbeitungssystem (STD_{B}) der Art B übertragen wird,
- dieses mit Hilfe der in der Verarbeitungs- und Speichereinheit (UTM_{B}) der Art B enthaltenen Transformationsfunktion (F_{B}) der Art B zu transformieren,
- und mit Hilfe der Informationen, welche die Charakterisierung der Ausgangseinheit (E_{D}) ermöglichen, nachzuweisen, daß dieses transformierte Element einem Element der Ausgangseinheit (E_{D}) entspricht.

12. Verfahren nach Anspruch 11, **dadurch gekennzeichnet, daß** es darin besteht, jedes Element der Eingangseinheit (E_{A}) zu verwenden, um eine Guthaben-Münze (j) zu bilden.

13. System, um die Möglichkeit der Transformation von Ausgangsdaten des Typs T_{X} in transformierte Daten des Typs T_{Y} sowie die Möglichkeit der Transformation von transformierten Daten des Typs T_{Y} in Ausgangsdaten des Typs T_{X} zu begrenzen, wobei die Transformation der Ausgangsdaten des Typs T_{X} in transformierte Daten des Typs T_{Y} mit Hilfe einer Transformationsfunktion (F_{A}) der Art A durchgeführt wird, während die Transformation der transformierten Daten des Typs T_{Y} in Ausgangsdaten des Typs T_{X} mit Hilfe einer zur Transformationsfunktion (F_{A}) der Art A inversen Transformationsfunktion (F_{B}) der Art B durchgeführt wird, **dadurch gekennzeichnet, daß** es folgendes umfaßt:
- wenigstens ein Datenverarbeitungssystem (STD_{A}) der Art A, wobei das System (STD_{A}) ein Computer oder ein Server ist,
- wenigstens ein Datenverarbeitungssystem (STD_{B}) der Art B, wobei das System (STD_{B}) ein Computer oder ein Server ist,
- zu wenigstens einem Zeitpunkt wenigstens eine Verbindung (L) zwischen dem Datenverarbeitungssystem (STD_{A}) der Art A und dem Datenverarbeitungssystem (STD_{B}) der Art B, um die Übertragung wenigstens der transformierten Daten des Typs T_{Y} von dem Datenverarbeitungssystem (STD_{A}) der Art A zu dem Datenverarbeitungssystem (STD_{B}) der Art B zu gewährleisten und/oder um die Übertragung von wenigstens den Ausgangsdaten des Typs T_{X} von dem Datenverarbeitungssystem (STD_{B}) der Art B zu dem Datenverarbeitungssystem (STD_{A}) der Art A sicherzustellen,
- wenigstens eine Verarbeitungs- und Speichereinheit (UTM_{A}) der Art A, die wenigstens Verarbeitungs- und Speichermittel (A₃₁) umfaßt, welche geeignet sind, Daten geheim zu speichern und eine algorithmische Verarbeitung durchzuführen, die teilweise oder vollkommen geheim ist, wobei diese Einheit (UTM_{A}) von einem Hardwareschlüssel auf dem USB-Bus des Systems STD_{A} oder von einer Chipkarte gebildet ist und die Transformationsfunktion (F_{A}) der Art A umfaßt,
- Mittel, um wenigstens eine der Ausgangsdaten des Typs T_{X} zu definieren, die dazu bestimmt ist, in transformierte Daten des Typs T_{Y} transformiert zu werden,
- Mittel, um wenigstens eine der Ausgangsdaten des Typs T_{X} von dem Datenverarbeitungssystem (STD_{A}) der Art A an die Verarbeitungs- und Speichereinheit (UTM_{A}) der Art A zu übertragen,
- Mittel, um in der Verarbeitungs- und Speichereinheit (UTM_{A}) der Art A jede der Ausgangsdaten des Typs T_{X} mit Hilfe der Transformationsfunktion (F_{A}) der Art A in transformierte Daten des Typs T_{Y} zu transformieren,
- Mittel, um jede der transformierten Daten des Typs T_{Y} von der Verarbeitungs- und Speichereinheit (UTM_{A}) der Art A an das Datenverarbeitungssystem (STD_{A}) der Art A zu übertragen,
- wenigstens eine Verarbeitungs- und Speichereinheit (UTM_{B}) der Art B, die Verarbeitungs- und Speichermittel (B₃₁) umfaßt, welche geeignet sind, Daten geheim zu speichern und eine algorithmische Verarbeitung durchzuführen, die teilweise oder vollkommen geheim ist, wobei diese Einheit (UTM_{B}) von einem Hardwareschlüssel auf dem USB-Bus des Systems STD_{B} oder von einer Chipkarte gebildet ist und die Transformationsfunktion (F_{B}) der Art B und nicht die Transformationsfunktion (F_{A}) der Art A umfaßt, um nicht eine der Ausgangsdaten des Typs T_{X} mit der Transformationsfunktion (F_{A}) der Art A in transformierte Daten des Typs T_{Y} transformieren zu können,
- Mittel, um wenigstens eine der transformierten Daten des Typs T_{Y} zu definieren, die dazu bestimmt ist, in Ausgangsdaten des Typs T_{X} transformiert zu werden,
- Mittel, um wenigstens eine der transformierten Daten des Typs T_{Y} von dem Datenverarbeitungssystem (STD_{B}) der Art B an die Verarbeitungs- und Speichereinheit (UTM_{B}) der Art B zu übertragen,
- Mittel, um in der Verarbeitungs- und Speichereinheit (UTM_{B}) der Art B jede der transformierten Daten des Typs T_{Y} mit Hilfe der Transformationsfunktion (F_{B}) der Art B in Ausgangsdaten des Typs T_{X} zu transformieren,
- sowie Mittel, um jede der Ausgangsdaten des Typs T_{X} von der Verarbeitungs- und Speichereinheit (UTM_{B}) der Art B an das Datenverarbeitungssystem (STD_{B}) der Art B zu übertragen.

14. System nach Anspruch 13, **dadurch gekennzeichnet, daß** die Verarbeitungs- und Speichereinheit (UTM_{A}) der Art A ebenfalls die zu der Transformationsfunktion (F_{A}) der Art A inverse Transformationsfunktion (F_{B}) der Art B umfaßt.

15. System nach Anspruch 13 oder 14, **dadurch gekennzeichnet, daß**:
- die Verarbeitungs- und Speichereinheit (UTM_{A}) der Art A als Transformationsfunktion (F_{A}) der Art A eine Verschlüsselungsfunktion mit Geheimschlüssel (CS) sowie eine Geheiminformation (I_{CS}), die dieser Funktion als Geheimschlüssel dient, enthält,
- und daß die Verarbeitungs- und Speichereinheit (UTM_{B}) der Art B sowie eventuell die Verarbeitungs- und Speichereinheit (UTM_{A}) der Art A als Transformationsfunktion (F_{B}) der Art B folgendes umfaßt:
- eine Verschlüsselungsfunktion mit inversem Geheimschlüssel (CSI), welche zu der Verschlüsselungsfunktion mit Geheimschlüssel (CS) invers ist,
- und eine Geheiminformation (I_{CSI}), welche der Verschlüsselungsfunktion mit inversem Geheimschlüssel (CSI) als Geheimschlüssel dient.

16. Vorrichtung zur Personalisierung der in einem System nach einem der Ansprüche 13 bis 15 verwendeten Verarbeitungs- und Speichereinheiten (UTM), **dadurch gekennzeichnet, daß** sie Mittel umfaßt, um folgendes zu personalisieren:
- wenigstens eine Verarbeitungs- und Speichereinheit (UTM_{A}) der Art A, welche die Transformationsfunktion (F_{A}) der Art A und eventuell die Transformationsfunktion (F_{B}) der Art B umfaßt,
- und/oder wenigstens eine Verarbeitungs- und Speichereinheit (UTM_{B}) der Art B, welche die Transformationsfunktion (F_{B}) der Art B und nicht die Transformationsfunktion (F_{A}) der Art A umfaßt.

17. Vorrichtung nach Anspruch 16, **dadurch gekennzeichnet, daß** sie für Verarbeitungs- und Speichereinheiten (UTM), die jeweils die Möglichkeit umfassen, die Transformationsfunktion (F_{A}) der Art A und die Transformationsfunktion (F_{B}) der Art B auszuführen, Sperrmittel aufweist, die geeignet sind, folgendes zu sperren:
- in jeder Verarbeitungs- und Speichereinheit (UTM_{B}) der Art B, die Verwendung der Transformationsfunktion (F_{A}) der Art A,
- und eventuell in jeder Verarbeitungs- und Speichereinheit (UTM_{A}) der Art A, die Verwendung der Transformationsfunktion (F_{B}) der Art B.
